(19) Europäisches Patentamt
European Patent Office
Office européen des brevets

(11) **EP 4 192 238 B1**

(12) **EUROPÄISCHE PATENTSCHRIFT**

(45) Veröffentlichungstag und Bekanntmachung des Hinweises auf die Patenterteilung:
**30.04.2025 Patentblatt 2025/18**

(21) Anmeldenummer: **21752562.5**

(22) Anmeldetag: **02.08.2021**

(51) Internationale Patentklassifikation (IPC):
**A01M 7/00** (2006.01)

(52) Gemeinsame Patentklassifikation (CPC):
**A01M 7/0089**

(86) Internationale Anmeldenummer:
**PCT/EP2021/071525**

(87) Internationale Veröffentlichungsnummer:
**WO 2022/029055 (10.02.2022 Gazette 2022/06)**

(54) **DYNAMISCHE DRIFTKONTROLLE**

DYNAMIC DRIFT CONTROL

CONTRÔLE DYNAMIQUE DE DÉRIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.08.2020 EP 20190080**

(43) Veröffentlichungstag der Anmeldung:
**14.06.2023 Patentblatt 2023/24**

(73) Patentinhaber: **Bayer Aktiengesellschaft**
**51373 Leverkusen (DE)**

(72) Erfinder:
• **BRAVIDOR, Josephine**
**13507 Berlin (DE)**
• **JASCHINSKI, Yves**
**42651 Solingen (DE)**
• **GÖKE, Dennis**
**51067 Köln (DE)**
• **WOLLENHAUPT, Robert**
**40764 Langenfeld (DE)**

(74) Vertreter: **BIP Patents**
**c/o Bayer Intellectual Property GmbH**
**Alfred-Nobel-Straße 50**
**40789 Monheim am Rhein (DE)**

(56) Entgegenhaltungen:
EP-A1- 2 921 050    EP-A2- 1 321 037
EP-A2- 2 022 329    WO-A1-2005/034622
WO-A1-97/12688

EP 4 192 238 B1

**Beschreibung**

Die vorliegende Erfindung befasst sich mit der Applikation von biologischen und/oder chemischen Substanzen oder Substanzgemischen, insbesondere von Pflanzenschutzmitteln, und/oder Nährstoffen im Freien. Gegenstände der vorliegenden Erfindung sind ein Verfahren, ein Computersystem, eine Vorrichtung und ein Computerprogrammprodukt zum dynamischen Anpassen von Applikationsparametern an variable Luftbewegungen.

Bei der Applikation von Pflanzenschutzmitteln kann es passieren, dass ein Teil des Pflanzenschutzmittels infolge von Wind unkontrolliert verteilt wird. Als Abdrift wird der Teil des Pflanzenschutzmittels bezeichnet, der das anvisierte Ziel nicht erreicht, sondern z.B. durch Wind an andere Orte verfrachtet wird. Es ist denkbar, dass es sich bei solchen Orten um Bereiche handelt, in denen Pflanzenschutzmittel unerwünscht oder verboten sind. Als Beispiele seien natürliche Gewässer, Wohngebiete, ökologische Schutzzonen und/oder dergleichen genannt.

Das gleiche gilt für Pflanzennährstoffe, die beim Anbau von Kulturpflanzen zur Düngung auf Felder aufgebracht werden; auch hier soll ein Eintrag der Nährstoffe z.B. in natürliche Gewässer verhindert werden.

Ebenso muss bei der Bekämpfung von unerwünschter Vegetation auf Gleisanlagen, Industrieanlage, Straßen, öffentlichen Plätzen und dergleichen darauf geachtet werden, dass Herbizide nicht infolge von Drift in unerwünschte Bereiche gelangen.

WO9712688A1 offenbart ein Sprühsystem für ein Sprühfahrzeug, das ein Sprühmitteltransport- und Driftmodell zur Vorhersage der Sprühmittelabscheidung umfasst. Das Modell erhält als Eingabe Daten über das Sprühsystem, die Konfiguration des Sprühfahrzeugs, die Luftstromeigenschaften des Sprühfahrzeugs, Fahrtrichtung, Fahrgeschwindigkeit, Gewicht und/oder Vibration des Sprühfahrzeugs. Als Umweltbedingungen können Windgeschwindigkeit, Turbulenz, Windrichtung und relative Luftfeuchtigkeit in das Sprühmitteltransport- und Driftmodell eingegeben werden. Darüber hinaus können die Ausrichtung, die Höhe und der Abstand des Sprühnebelausstoßes von den Düsenspitzen, Feldbedingungen wie Topografie und Vegetation in den Sprühzielzonen und den umliegenden Gebieten sowie die Flüssigkeitseigenschaften der Sprühmischung den Transport und die Ablagerung des Sprühnebels beeinflussen. Das Steuersystem des Sprühsystems kann einige oder alle dieser Faktoren nutzen, um die Sollwerte für die Ausbringungsmenge und die Tröpfchengröße unabhängig voneinander zu steuern.

Es besteht ein Bedarf, ein unkontrolliertes Verfrachten von biologischen und/oder chemischen Substanzen oder Substanzgemischen infolge von Wind in Bereiche, in denen sie unerwünscht oder verboten sind, mit einfachen Mitteln zu verhindern.

Diese Aufgabe wird durch die Gegenstände der unabhängigen Patentansprüche gelöst. Bevorzugte Ausführungsformen finden sich in den abhängigen Patentansprüchen, der vorliegenden Beschreibungen sowie in den Zeichnungen.

Ein erster Gegenstand der vorliegenden Erfindung ist ein Verfahren, umfassend die Schritte:

- Applizieren eines Sprühmittels gemäß definierter Applikationsparameter in einem Zielgebiet mittels einer Sprühvorrichtung, wobei die Sprühvorrichtung mindestens eine Sprühdüse umfasst, wobei das Zielgebiet mindestens eine Schutzzone umfasst, und/oder an mindestens eine Schutzzone angrenzt und/oder in einer Nachbarschaft zu mindestens einer Schutzzone liegt, wobei jede vorhandene Schutzzone durch einen Mindestabstand gekennzeichnet ist, der bei der Applikation des Sprühmittels mindestens einzuhalten ist,
- während des Applizierens:

    o Bestimmen einer Richtung einer Luftbewegung,
    o Bestimmen einer Position der mindestens einen Sprühdüse,
    o für jede vorhandene Schutzzone: Ermitteln einer zur Schutzzone korrespondierenden Pufferzone, wobei sich die korrespondierende Pufferzone von der mindestens einen Sprühdüse in die Richtung der Luftbewegung erstreckt, wobei die korrespondierende Pufferzone eine Ausdehnung in Richtung der Luftbewegung aufweist, die mit dem Mindestabstand der Schutzzone korreliert,
    o Prüfen, ob eine Überlappung zwischen der mindestens einen Schutzzone und der mit ihr korrespondierenden Pufferzone vorliegt,
    o im Fall einer Überlappung: Anpassen von Applikationsparametern zur Verhinderung der Überlappung,

- Fortsetzen des Applizierens unter Verwendung der angepassten Applikationsparameter.

Ein weiterer Gegenstand der vorliegenden Erfindung ist eine Sprühvorrichtung umfassend:

- Mittel zum Bewegen der Sprühvorrichtung in oder über einem Zielgebiet, wobei das Zielgebiet mindestens eine Schutzzone umfasst, und/oder an mindestens eine Schutzzone angrenzt und/oder in einer Nachbarschaft zu mindestens einer Schutzzone liegt, wobei jede vorhandene Schutzzone durch einen Mindestabstand gekennzeichnet ist, der bei der Applikation des Sprühmittels mindestens einzuhalten ist,
- mindestens eine Sprühdüse,
- Mittel zum Ausbringen von Sprühmittel über die mindestens eine Sprühdüse,

- Mittel zum Bestimmen der Position der mindestens einen Sprühdüse in dem Zielgebiet,
- einen Sensor zum Ermitteln einer Richtung einer Luftbewegung,
- eine Steuer- und Recheneinheit, wobei die Steuer- und Recheneinheit konfiguriert ist, während der Applikation von Sprühmittel gemäß definierter Applikationsparameter fortlaufend die Position der mindestens einen Sprühdüse in dem Zielgebiet zu bestimmen, fortlaufend Messdaten zur Richtung der Luftbewegung zu empfangen, und anhand der Position und der empfangenen Messdaten für jede vorhandene Schutzzone eine korrespondierende Pufferzone zu ermitteln, wobei sich die korrespondierende Pufferzone von der mindestens einen Sprühdüse in die Richtung der Luftbewegung erstreckt, wobei die korrespondierende Pufferzone eine Ausdehnung in Richtung der Luftbewegung aufweist, die mit dem Mindestabstand der Schutzzone korreliert, wobei die Steuer- und Recheneinheit konfiguriert ist, zu prüfen, ob eine Überlappung zwischen der mindestens einen Schutzzone und der mit ihr korrespondierenden Pufferzone vorliegt, und für den Fall, dass mindestens eine Überlappung vorliegt, die Applikationsparameter so zu verändern, dass keine Überlappung mehr vorliegt.

Ein weiterer Gegenstand der vorliegenden Erfindung ist ein Computersystem umfassend

- eine Empfangseinheit
- eine Steuer- und Recheneinheit und
- eine Ausgabeeinheit

 - wobei die Steuer- und Recheneinheit konfiguriert ist, die Empfangseinheit zu veranlassen, fortlaufend eine Position mindestens einer Sprühdüse an einer Sprühvorrichtung in einem Zielgebiet zu ermitteln, wobei das Zielgebiet mindestens eine Schutzzone umfasst, und/oder an mindestens eine Schutzzone angrenzt und/oder in einer Nachbarschaft zu mindestens einer Schutzzone liegt, wobei sich die Sprühvorrichtung in oder über dem Zielgebiet bewegt und Sprühmittel gemäß definierter Applikationsparameter über die mindestens eine Sprühdüse appliziert, wobei jede vorhandene Schutzzone durch einen Mindestabstand gekennzeichnet ist, der bei der Applikation des Sprühmittels mindestens einzuhalten ist,
 - wobei die Steuer- und Recheneinheit konfiguriert ist, die Empfangseinheit zu veranlassen, fortlaufend eine Richtung einer Luftbewegung zu empfangen,
 - wobei die Steuer- und Recheneinheit konfiguriert ist, anhand der Position der mindestens einen Sprühdüse und der Richtung der Luftbewegung für jede vorhandene Schutzzone eine korrespondierende Pufferzone zu ermitteln, wobei sich die korrespondierende Pufferzone von der mindestens einen Sprühdüse in die Richtung der Luftbewegung erstreckt, wobei die korrespondierende Pufferzone eine Ausdehnung in Richtung der Luftbewegung aufweist, die mit dem Mindestabstand der Schutzzone korreliert,
 - wobei die Steuer- und Recheneinheit konfiguriert ist, zu prüfen, ob eine Überlappung zwischen der mindestens einen Schutzzone und der mit ihr korrespondierenden Pufferzone vorliegt, und für den Fall, dass mindestens eine Überlappung vorliegt, die Applikationsparameter so zu verändern, dass keine Überlappung mehr vorliegt, oder die Ausgabeeinheit zu veranlassen, ein oder mehrere Signale auszugeben, die zu einer Änderung der Applikationsparameter führen, so dass keine Überlappung mehr vorliegt.

Ein weiterer Gegenstand der vorliegenden Erfindung ist ein Computerprogrammprodukt umfassend ein Computerprogramm, das in einen Arbeitsspeicher eines Computersystems geladen werden kann und dort das Computersystem dazu veranlasst, folgende Schritte ausführen:

- Ermitteln einer Position mindestens einer Sprühdüse an einer Sprühvorrichtung in einem Zielgebiet, wobei das Zielgebiet mindestens eine Schutzzone umfasst, und/oder an mindestens eine Schutzzone angrenzt und/oder in einer Nachbarschaft zu mindestens einer Schutzzone liegt, wobei sich die Sprühvorrichtung in oder über dem Zielgebiet bewegt und Sprühmittel gemäß definierter Applikationsparameter über die mindestens eine Sprühdüse appliziert, wobei jede vorhandene Schutzzone durch einen Mindestabstand gekennzeichnet ist, der bei der Applikation des Sprühmittels mindestens einzuhalten ist,
- Empfangen einer Richtung einer Luftbewegung,
- für jede vorhandene Schutzzone: Ermitteln einer korrespondierenden Pufferzone anhand der Position der mindestens einen Sprühdüse und der Richtung der Luftbewegung, wobei sich die korrespondierende Pufferzone von der mindestens einen Sprühdüse in die Richtung der Luftbewegung erstreckt, wobei die korrespondierende Pufferzone eine Ausdehnung in Richtung der Luftbewegung aufweist, die mit dem Mindestabstand der Schutzzone korreliert,
- Prüfen, ob eine Überlappung zwischen der mindestens einen Schutzzone und der mit ihr korrespondierenden Pufferzone vorliegt,
- für den Fall, dass mindestens eine Überlappung vorliegt: Ausgeben eines oder mehrerer Signale, die zu einer Veränderung der Applikationsparameter führen, so dass keine Überlappung mehr vorliegt.

Die Erfindung wird nachstehend näher erläutert, ohne zwischen den Erfindungsgegenständen (Verfahren, Computersystem, Vorrichtung, Computerprogrammprodukt) zu unterscheiden. Die nachfolgenden Erläuterungen sollen vielmehr für alle Erfindungsgegenstände in analoger Weise gelten, unabhängig davon, in welchem Kontext (Verfahren, Computersystem, Vorrichtung, Computerprogrammprodukt) sie erfolgen.

Wenn in der vorliegenden Beschreibung oder in den Patentansprüchen Schritte in einer Reihenfolge genannt sind, bedeutet dies nicht zwingend, dass die Erfindung auf die genannte Reihenfolge beschränkt ist. Vielmehr ist denkbar, dass die Schritte auch in einer anderen Reihenfolge oder auch parallel zueinander ausgeführt werden; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen der Erfindung dar.

Einige Aspekte der vorliegenden Erfindung werden zur Verdeutlichung anhand von Zeichnungen erläutert, ohne die Erfindung auf die in den Zeichnungen dargestellten Merkmale und Merkmalkombinationen beschränken zu wollen.

Die vorliegende Erfindung stellt Mittel bereit, mit denen während der Applikation eines Sprühmittels in einem Zielgebiet die Applikationsparameter automatisiert und fortlaufend (dynamisch) an sich verändernde Luftbewegungen angepasst werden, um Abdrift in andere Bereiche zu verhindern.

Das "Zielgebiet" (engl.: *target area*) ist das Gebiet, in dem Sprühmittel appliziert wird/werden soll. Das Zielgebiet kann beispielsweise ein Feld für den Anbau von Kulturpflanzen sein. In einem solchen Fall handelt es sich bei dem Sprühmittel vorzugsweise um ein Pflanzenschutzmittel und/oder um Nährstoffe für die angebauten Pflanzen.

Unter dem Begriff "Pflanzenschutzmittel" wird ein Mittel verstanden, das dazu dient, Pflanzen oder Pflanzenerzeugnisse vor Schadorganismen zu schützen oder deren Einwirkung vorzubeugen, unerwünschte Pflanzen oder Pflanzenteile zu vernichten, ein unerwünschtes Wachstum von Pflanzen zu hemmen oder einem solchen Wachstum vorzubeugen, und/oder in einer anderen Weise als Nährstoffe die Lebensvorgänge von Pflanzen zu beeinflussen (z.B. Wachstumsregler). Wachstumsregler dienen zum Beispiel der Erhöhung der Standfestigkeit bei Getreide durch Verkürzung der Halmlänge (Halmverkürzer oder besser Internodienverkürzer), Verbesserung der Bewurzelung von Stecklingen, Verringerung der Pflanzenhöhe durch Stauchung im Gartenbau oder der Verhinderung der Keimung von Kartoffeln. Weitere Beispiele für Pflanzenschutzmittel sind Herbizide, Fungizide und Pestizide (z.B. Insektizide).

Als "Nährstoffe" werden diejenigen anorganischen und organischen Verbindungen bezeichnet, denen Pflanzen die Elemente entnehmen können, aus denen ihr Körper aufgebaut ist. Je nach dem Standort der Pflanze werden die Nährstoffe aus der Luft, dem Wasser und/oder dem Boden entnommen. Dabei liegen die Nährstoffe oftmals nicht in der optimal verwertbaren Form und Menge vor. Entweder sind sie von Natur aus nicht in ausreichender Menge vorhanden oder sie werden z.B. durch Auswaschung im Boden verlagert oder diesem durch die Ernteprodukte in beträchtlichen Mengen entzogen. Erst die Zufuhr von Pflanzennährstoffen durch Düngung ermöglicht es, diese Nährstoffentzüge zu ersetzen. Mit der Düngung wird also die Ernährung der Pflanze verbessert, das Pflanzenwachstum gefördert, der Ertrag erhöht, die Qualität der Ernteprodukte verbessert und letztlich die Bodenfruchtbarkeit erhalten und gefördert. In dieser Beschreibung wird der Begriff Nährstoffe synonym zum Begriff Dünger verwendet.

Bei dem Zielgebiet kann es sich aber auch um eine Industrieanlage, Gleisanlagen, Straßen, Wege, Plätze und/oder dergleichen handeln, die von ungewünschter Vegetation befreit werden sollen. In einem solchen Fall handelt es sich bei dem Sprühmittel vorzugsweise um ein Herbizid.

Allgemein handelt es sich bei dem Sprühmittel um eine biologische Substanz und/oder eine chemische Substanz oder um ein Gemisch von solchen Substanzen. Das Sprühmittel wird eingesetzt, um einen definierten Effekt in dem Zielgebiet zu erzeugen (Pflanzenwachstum verhindern oder fördern, Ausbreitung von Schadorganismen verhindern und/oder dergleichen). Üblicherweise gibt es aber Bereiche in, an und/oder um das Zielgebiet, in denen dieser Effekt unerwünscht ist. Es soll verhindert werden, dass das Sprühmittel bei einer Ausbringung in dem Zielgebiet in diese Bereiche gelangt. Solche Bereiche werden in dieser Beschreibung als Schutzzonen (engl.: *non-target areas*) bezeichnet.

Eine "Schutzzone" ist ein Bereich innerhalb des Zielgebiets und/oder ein Bereich angrenzend an das Zielgebiet und/oder ein Bereich in der Nachbarschaft zu dem Zielgebiet, in den das Sprühmittel nicht gelangen soll. Dabei umfasst der Begriff "Nachbarschaft" alle Bereiche, in die Sprühmittel infolge von Luftbewegungen (vornehmlich Wind) verfrachtet werden kann, wenn das Sprühmittel in dem Zielgebiet ausgebracht wird. Üblicherweise ist dies ein Bereich mit einem Abstand zum Zielgebiet von weniger als einem Kilometer, vorzugsweise von maximal 100 Metern.

Eine Schutzzone kann zum Beispiel ein Weg oder eine Straße sein, auf den/die kein Sprühmittel gelangen soll. Eine Schutzzone kann zum Beispiel ein Gewässer (Bach, Teich, See, Fluss, Meer) sein, in das kein Sprühmittel gelangen soll. Eine Schutzzone kann beispielsweise ein Blühstreifen oder ein Grünstreifen sein, der zur Förderung der lokalen Biodiversität dienen soll. Eine Schutzzone kann beispielsweise ein angrenzendes Feld sein. Eine Schutzzone kann beispielsweise ein Wald oder eine Wiese oder eine Weide oder ein ökologisches Schutzgebiet oder ein Wohngebiet sein. Eine Schutzzone kann ein Gebüsch oder eine Hecke sein oder mehrere Gebüsche und/oder Hecken umfassen. Eine Schutzzone kann ein Habitat für Nichtzielorganismen sein, wobei der Begriff "Nichtzielorganismen" angibt, dass das Sprühmittel nicht zum Besprühen der Nichtzielorganismen gedacht ist. Eine Schutzzone kann auch ein Bereich sein, in dem sich ein Mensch und/oder ein Tier oder eine Mehrzahl an Menschen und/oder Tieren aufhält. Eine Schutzzone muss nicht statisch sein, sondern kann dynamisch sein; z.B. kann es sich um ein Objekt oder um ein Lebewesen handeln, das sich in oder über einem Zielgebiet bewegt oder an einem Zielgebiet vorbeibewegt. Die Schutzzone kann das Objekt bzw. das Lebewesen sowie einen definierten Bereich um das Objekt bzw. das Lebewesen umfassen. Es ist denkbar, dass ein oder mehrere Sensoren (z.B. Bewegungssensoren, Kameras und/oder dergleichen) automatisiert und fortlaufend ein Objekt und/oder ein Lebewesen erfassen und eine definierte Schutzzone um das Objekt bzw. Lebewesen ermitteln.

Vorzugsweise sind sowohl das Zielgebiet als auch vorhandene (statische) Schutzzonen in, an und/oder um das Zielgebiet in einer digitalen Karte eingetragen oder können in eine digitale Karte durch einen Nutzer eingetragen (z.B. an einem Computer mit Hilfe einer Maus eingezeichnet) werden. Eine solche digitale Karte ist eine Repräsentation eines Teils der Erdoberfläche. Der Begriff "digital" bedeutet, dass die Karte von einer Maschine, in der Regel einem Computersystem, verarbeitet werden kann. Unter "Verarbeitung" werden die bekannten Verfahren zur elektronischen Datenverarbeitung (EDV) verstanden.

Im Falle von dynamischen Schutzzonen können die Schutzzonen wie oben beschrieben fortlaufend und automatisiert ermittelt und in eine digitale Karte aufgenommen werden und die Karte kann bei Veränderungen in Bezug auf die Größe und/oder Position und/oder Form einer Schutzzone aktualisiert werden.

Es ist für jede dieser Schutzzonen ein Mindestabstand definiert, der bei der Applikation eines (definierten) Sprühmittels mindestens eingehalten werden muss/soll. Dabei kann der Mindestabstand gesetzlich oder und/oder behördlich gefordert sein und/oder Teil von bewährten Praktiken (engl.: *best practices*) sein und/oder sich aus einer anderen Anforderung ergeben.

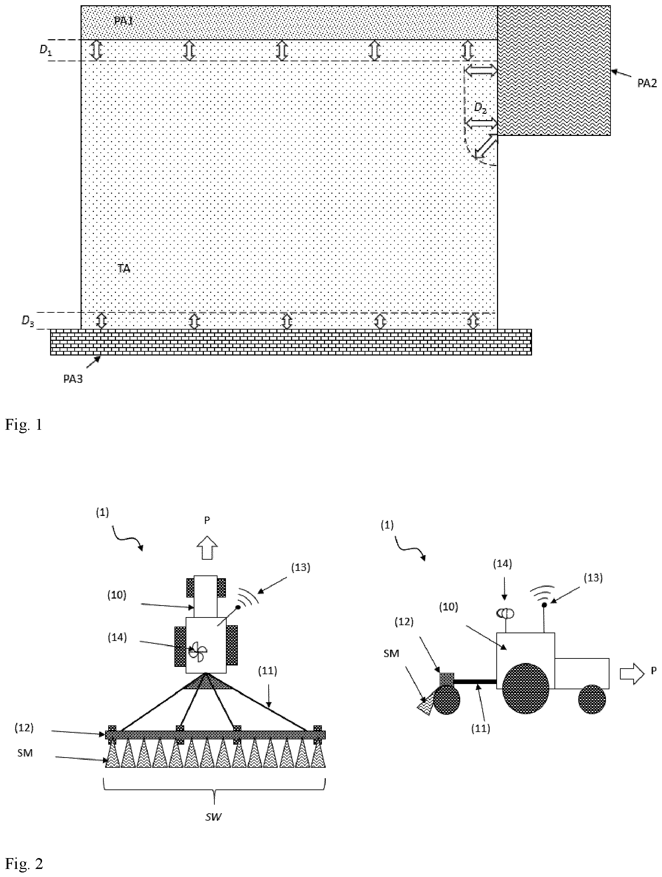

Fig. 1 zeigt beispielhaft schematisch ein Zielgebiet (TA) mit einer ersten angrenzenden Schutzzone (PA1), einer zweiten angrenzenden Schutzzone (PA2) und einer dritten angrenzenden Schutzzone (PA3).

Von der ersten Schutzzone (PA1) muss/soll bei der Applikation eines Sprühmittels ein erster Mindestabstand ($D_1$) eingehalten werden. Von der zweiten Schutzzone (PA2) muss/soll bei der Applikation eines Sprühmittels ein zweiter Mindestabstand ($D_2$) eingehalten werden. Von der dritten Schutzzone (PA3) muss/soll bei der Applikation eines Sprühmittels ein dritter Mindestabstand ($D_3$) eingehalten werden. Im vorliegenden Beispiel gilt: $D_3 < D_1 < D_2$.

Üblicherweise soll die Einhaltung des Mindestabstands bewirken, dass Sprühmittel, das in dem Zielgebiet ausgebracht wird, nicht z.B. infolge von Wind in eine Schutzzone gelangt. Die statische Einhaltung des Mindestabstands, unabhängig von der Windrichtung und einer daraus resultierenden Abdrift, kann jedoch zu einer effektiven Verkleinerung des Zielgebiets führen, im Falle eines Feldes für den Anbau von Kulturpflanzen zu einer Verkleinerung der Anbaufläche. Ferner können infolge des Mindestabstands nicht alle Bereiche eines Zielgebiets mit einem Sprühmittel behandelt werden - es besteht die Gefahr der Ausbreitung von Schadorganismen und/oder ein Risiko, dass sich bei Schadorganismen Resistenzen gegenüber dem Sprühmittel ausbilden und/oder es müssen andere, meist aufwändigere Maßnahmen getroffen werden, um auch Bereiche, die innerhalb des Mindestabstands liegen, zu behandeln. Ebenso ist denkbar, dass im Fall des Anbaus von Kulturpflanzen eine Nichtbehandlung oder unzureichende Behandlung von Teilflächen in dem Zielgebiet einen Ertragsverlust bedeutet. Diese Nachteile werden durch die vorliegende Erfindung behoben. Mit der vorliegenden Erfindung werden während der Applikation von Sprühmittel kontinuierlich und automatisch diejenigen Bereiche identifiziert, in die Sprühmittel infolge von sich verändernden Luftbewegungen gelangen kann, und es werden die Applikationsparameter so angepasst, dass ein Verfrachten von Sprühmittel in Schutzzonen verhindert wird.

Zur Applikation eines Sprühmittels in einem Zielgebiet wird eine Sprühvorrichtung eingesetzt. Eine solche Sprühvorrichtung verfügt üblicherweise über Mittel zum Bewegen der Sprühvorrichtung in oder über dem Zielgebiet. Die Sprühvorrichtung kann beispielsweise eine motorbetriebene Landmaschine, ein bemanntes oder unbemanntes Fluggerät (z.B. eine Drohne) oder ein Roboter sein. Die Bewegung der Sprühvorrichtung in oder über dem Feld kann autonom erfolgen oder durch einen Menschen gesteuert sein.

Die Sprühvorrichtung weist üblicherweise mindestens einen Behälter zur Aufnahme eines Sprühmittels auf. Es ist denkbar, dass mehrere Behälter vorhanden sind, zum Beispiel zur Aufnahme von verschiedenen Sprühmitteln und/oder zur Aufnahme von (verschiedenen) Sprühmittelkonzentrat(en) und Verdünnungsmittel(n) (üblicherweise Wasser).

Die Sprühvorrichtung umfasst mindestens eine Sprühdüse. Der Begriff "Sprühdüse" bedeutet eine oder mehrere Öffnungen, aus der/denen Sprühmittel austreten und in dem Zielgebiet ausgebracht werden kann. Dabei soll der Begriff "Sprühdüse" nicht einschränkend verstanden werden, er soll beispielsweise auch eine rotierende Spritzscheibe umfassen.

Vorzugsweise umfasst die Sprühvorrichtung eine Mehrzahl an Sprühdüsen. Der Begriff "Mehrzahl" bedeutet mindestens zwei, vorzugsweise mindestens drei. Üblicherweise sind mindestens 10 Sprühdüsen vorhanden. Fördermittel (z.B. eine oder mehrere Pumpen) fördern Sprühmittel aus einem oder mehreren Behälter(n) in Richtung der mindestens einen Sprühdüse. Über die mindestens eine Sprühdüse wird das Sprühmittel in/über dem Zielgebiet ausgebracht.

Tritt Sprühmittel aus der mindestens einen Sprühdüse aus, benetzt das Sprühmittel eine definierte Fläche in dem Zielgebiet. Die Größe und Form der benetzten Fläche wird durch die Applikationsparameter bestimmt. Die Applikationsparameter sind diejenigen Parameter, die das Sprühergebnis bestimmen. Zu den Applikationsparametern zählen die Art und Form der mindestens einen Sprühdüse, die Anzahl der verwendeten Sprühdüsen, die Anordnung der Sprühdüsen, der Sprühdruck, die Art des Sprühmittels, die Bewegungsgeschwindigkeit der Sprühvorrichtung und/oder dergleichen. Die Größe und Form der benetzten Fläche lässt sich empirisch ermitteln. Die mit Sprühmittel benetzte Fläche wird in dieser Beschreibung auch als "Benetzungsfläche" bezeichnet. Ein synonymer Begriff ist der Begriff Sprühzone. Die bei Stillstand der Sprühvorrichtung benetzte Fläche (die Sprühvorrichtung bewegt sich nicht) wird in dieser Beschreibung auch als Stillstandsbenetzungsfläche bezeichnet. Die Benetzungsfläche und die Stillstandsbenetzungsfläche sind vorzugsweise die benetzen Flächen, die sich bei einer Applikation ergeben, wenn keinerlei Wind weht.

Die Sprühvorrichtung kann mindestens einen Sprühbalken umfassen. Ein solcher Sprühbalken weist üblicherweise eine Mehrzahl an Sprühdüsen auf, die üblicherweise in einem definierten Abstand zueinander so an dem Sprühbalken angebracht sind, dass das aus der Mehrzahl der Sprühdüsen ausgebrachte Sprühmittel eine Fläche in dem Zielgebiet möglichst gleichmäßig benetzt. Der Sprühbalken ist üblicherweise quer (vorzugsweise senkrecht) zur Bewegungsrichtung der Sprühvorrichtung angeordnet, so dass er bei einer geradlinigen Bewegung der Sprühvorrichtung entlang einer definierten Strecke eine Fläche überstreicht, deren Flächeninhalt (bei einer senkrechten Anordnung) dem Produkt aus Breite des Sprühbalkens und der Länge der definierten Strecke entspricht.

Wird bei dieser geradlinigen Bewegung Sprühmittel ausgebracht, so benetzt es eine Fläche, deren Flächeninhalt dem Produkt aus Sprühbreite und Länge der definierten Strecke entspricht.

Fig. 2 zeigt beispielhaft und schematisch eine Ausführungsform der erfindungsgemäßen Sprühvorrichtung (a) in einer Aufsicht und (b) in einer Seitenansicht. Die Sprühvorrichtung (1) umfasst einen Traktor (10), der über ein Gestänge (11) mit einem Sprühbalken (12) verbunden ist. Der Sprühbalken (12) weist eine Mehrzahl an Sprühdüsen auf, die in einem gleichbleibenden Abstand zueinander angeordnet sind. Über die Sprühdüsen verlässt Sprühmittel SM die Sprühvorrichtung. Bewegt sich die Sprühvorrichtung vorwärts (in Richtung des Pfeils P), beträgt die Sprühbreite *SW.*

Die Sprühvorrichtung in Fig. 2 umfasst ferner einen GPS-Empfänger (13). Der Begriff "GPS-Empfänger" soll allgemein als ein Bestandteil eines Satellitennavigationssystems verstanden werden. Das *Global Positioning System* (GPS; deutsch: Globales Positionsbestimmungssystem), offiziell NAVSTAR GPS, ist ein Beispiel eines globalen Satellitennavigationssystems zur Positionsbestimmung; andere Beispiele sind GLONASS, Galileo und Beidou. Die Satelliten eines solchen Satellitennavigationssystems teilen über Funkcodes ihre genaue Position und Uhrzeit mit. Zur Positionsbestimmung muss ein Empfänger (der "GPS-Empfänger") die Signale von mindestens vier Satelliten gleichzeitig empfangen. Im Empfänger werden die Pseudo-Signallaufzeiten gemessen und daraus die aktuelle Position ermittelt.

In Fig. 2 ist der GPS-Empfänger (13) an dem Traktor (10) angebracht. Er kann jedoch auch an dem Gestänge (11), dem Sprühbalken (12) und/oder in der Nähe einer der Sprühdüsen und/oder an einem anderen Bestandteil der Sprühvorrichtung angebracht sein. Es ist auch denkbar, dass mehrere GPS-Empfänger (oder andere Positionsermittlungseinheiten) vorhanden sind. Das Ziel der Erfindung besteht darin, für jede vorhandene Schutzzone eine Pufferzone zu ermitteln, die sich ausgehend von der mindestens einen Sprühdüse in die Richtung einer ermittelten Luftbewegung erstreckt. Daher wird vorzugsweise die Position der mindestens einen Sprühdüse ermittelt. Sind mehrere Sprühdüsen vorhanden, wird vorzugsweise die Position einer jeden vorhandenen Sprühdüse ermittelt. Ist der GPS-Empfänger in der Nähe einer Sprühdüse angebracht, so kann die Position der Sprühdüse mit der Position des GPS-Empfängers gleichgesetzt werden. Dabei bedeutet der Begriff "Nähe", dass der Abstand zwischen der Sprühdüse und dem GPS-Empfänger vorzugsweise kleiner als die Genauigkeit des GPS-Empfängers bei der Positionsbestimmung ist. Ist der GPS-Empfänger an der Sprühvorrichtung in einem Anstand zur mindestens einen Sprühdüse angebracht, der größer als die Genauigkeit des GPS-Empfängers bei der Positionsbestimmung ist, kann die Position der Sprühdüse bei bekannter Anordnung der Sprühdüse an der Sprühvorrichtung beispielsweise aus der Position des GPS-Empfängers, dem Abstand zwischen GPS-Empfänger und Sprühdüse und der Bewegungsrichtung der Sprühvorrichtung ermittelt werden.

Es sei jedoch klargestellt, dass zur Positionsbestimmung der mindestens einen Sprühdüse und/oder der Sprühvorrichtung nicht zwingend ein GPS-Empfänger nötig ist; die Positionsbestimmung kann auch auf andere Weise, z.B. über GSM-Ortung und/oder Abstandssensoren und/oder dergleichen erfolgen.

Die Sprühvorrichtung in Fig. 2 umfasst ferner einen Luftbewegungssensor (14). Der Luftbewegungssensor kann (wie in Fig. 2 gezeigt) am Traktor (10), an dem Gestänge (11) und/oder an dem Sprühbalken (12) angebracht sein. Je näher der Luftbewegungssensor zur mindestens einen Sprühdüse angebracht ist, desto genauer kann die Luftbewegung an der Sprühdüse ermittelt werden. Es ist denkbar, dass mehrere Luftbewegungssensoren vorhanden sind. Die Sprühvorrichtung muss jedoch nicht zwingend einen Luftbewegungssensor umfassen. Es ist auch denkbar, dass ein oder mehrere Luftbewegungssensoren stationär in dem Zielgebiet oder in der Nachbarschaft zum Zielgebiet aufgestellt sind.

Erfindungsgemäß wird während der Applikation von Sprühmittel fortlaufend eine Luftbewegungsrichtung mit Hilfe eines Luftbewegungssensor oder mehrerer Luftbewegungssensoren erfasst. Ein Luftbewegungssensor misst die Richtung, in die sich Luft relativ zum Luftbewegungssensor bewegt. Denkbar ist auch, dass der Luftbewegungssensor neben der Luftbewegungsrichtung auch die Geschwindigkeit der sich relativ zum Luftbewegungssensor bewegten Luft erfasst. Bei einem solchen Luftbewegungssensor kann es sich beispielsweise um eine Windfahne (Anemoskop) und/oder einen Windmesser (Anemometer) handeln.

Bei einer Applikation von Sprühmittel in einem Zielgebiet kann es dazu kommen, dass Luftbewegungen Teile des Sprühmittels in eine oder mehrere Schutzzonen verfrachten, in denen das Sprühmittel unerwünscht ist. Üblicherweise handelt es sich bei solchen Luftbewegungen um Wind. Unter "Wind" wird eine Luftbewegung in der Erdatmosphäre verstanden. Denkbar ist auch, dass es sich bei der Luftbewegung um einen Fahrtwind oder um eine Kombination aus Wind und Fahrtwind handelt. Der Fahrtwind ist der durch die Bewegung eines Fahrzeugs oder Flugzeugs hervorgerufene "Gegenwind". Er ist also gleich schnell wie die Bewegungsgeschwindigkeit des Fahrzeugs/Flugzeugs und der Bewegungsrichtung (um 180°) entgegengesetzt gerichtet.

Der mindestens eine Luftbewegungssensor ermittelt fortlaufend die Luftbewegungsrichtung relativ zum Luftbewegungssensor und optional auch die Luftbewegungsgeschwindigkeit relativ zum Luftbewegungssensor und übermittelt die Messwerte an eine Steuer- und Recheneinheit, zum Beispiel per Funksignal oder über eine Kabelverbindung.

Die Steuer- und Recheneinheit kann ein Bestandteil der Sprühvorrichtung oder von dieser unabhängig sein.

Die Steuer- und Recheneinheit bezieht ferner fortlaufend Daten zur Position der Sprühvorrichtung und/oder der mindestens einen Sprühdüse, z.B. von einem GPS-Empfänger.

Optional kann auch die Bewegungsgeschwindigkeit der Sprühvorrichtung erfasst und an die Steuer- und Recheneinheit übermittelt werden; dazu kann die Sprühvorrichtung mit einem Tachometer ausgestattet sein; denkbar ist aber auch eine Geschwindigkeitsbestimmung mittels des GPS-Empfängers (oder eines anderen Positionsbestimmungssystem) in Kombination mit einem Zeitmesser.

Die Steuer- und Recheneinheit ist konfiguriert, auf Basis der empfangenen Daten (Position der Sprühvorrichtung / der mindestens einen Sprühdüse, Richtung der Luftbewegung, optional Geschwindigkeit der Luftbewegung, optional Bewegungsgeschwindigkeit der Sprühvorrichtung) fortlaufend und automatisiert eine oder mehrere Pufferzonen (engl. *buffer zones*) zu errechnen. Jede dieser Pufferzonen korrespondiert mit einer Schutzzone. Jede dieser Pufferzonen erstreckt sich von der mindestens einen Sprühdüse aus in die Richtung, in die sich die Luft, die die Sprühdüse umgibt, relativ zur Sprühdüse bewegt.

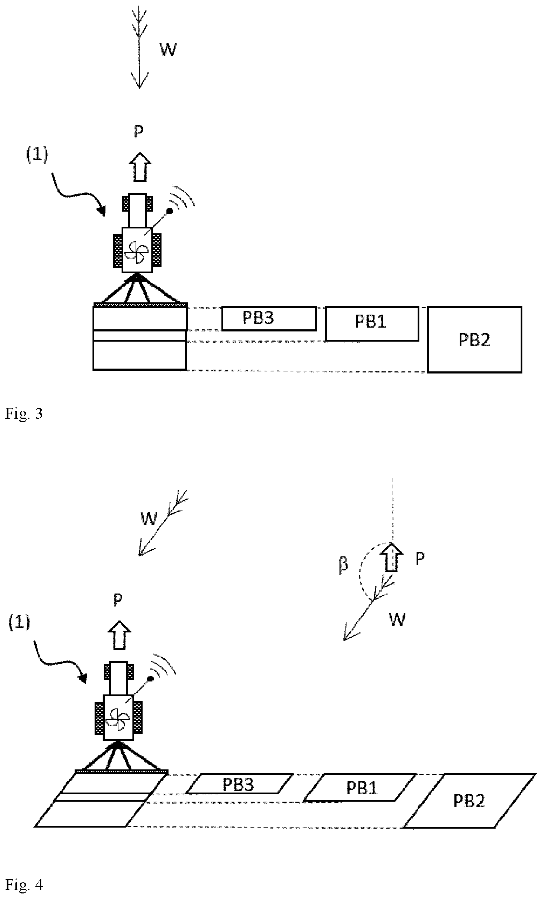

Dabei können die Pufferzonen eine unterschiedlich große Ausdehnung in Richtung der Luftbewegung haben. Diese Ausdehnung korreliert mit dem Mindestabstand der zu der Pufferzone gehörenden Schutzzone. Je größer der Mindestabstand einer Schutzzone ist, desto größer ist folglich auch die Ausdehnung der Pufferzone in Richtung der Luftbewegung. Dies ist beispielhaft und schematisch in Fig. 3, Fig. 4 und Fig. 5 dargestellt.

Fig. 3, Fig. 4 und Fig. 5 zeigen beispielhaft und schematisch verschiedene Pufferzonen in Abhängigkeit von der Windrichtung.

In Fig. 3 ist die Sprühvorrichtung (1) aus Fig. 2 in einer verkleinerten Form dargestellt. Sie bewegt sich in Richtung des Pfeils P. Der Pfeil W zeigt die Richtung an, in die sich der Wind bewegt; er ist der Bewegungsrichtung der Sprühvorrichtung entgegengesetzt gerichtet (180°). Von dem Sprühbalken der Sprühvorrichtung (1) erstrecken sich drei Flächen in die Richtung, in die sich der Wind bewegt. Die Flächen weisen unterschiedliche Flächeninhalte und unterschiedliche Ausdehnungen in Windrichtung auf. Da sich die Flächen überlappen, sind sie zur Verdeutlichung ein zweites Mal rechts von der Sprühvorrichtung in aufgefächerter Form dargestellt. Die Flächen tragen die Bezeichnungen PB3, PB1 und PB2. Jede der Flächen definiert eine Pufferzone. In Fig. 3 gilt: PB3<PB1< PB2. Jede der Pufferzonen korrespondiert mit einer Schutzzone. Dabei bedeutet der Begriff "korrespondieren" vorzugsweise, dass die Größe der Pufferzone mit dem Mindestabstand der Schutzzone korreliert.

In Fig. 4 hat sich die Situation in Bezug zu Fig. 3 in der Weise geändert, dass sich die Windrichtung, dargestellt durch den Pfeil W, verändert hat. Die Bewegungsrichtung des Windes und die Bewegungsrichtung der Sprühvorrichtung schließen einen Winkel β von etwa 135° ein. Von dem Sprühbalken der Sprühvorrichtung (1) erstrecken sich die drei Pufferzonen in die Richtung, in die sich der Wind bewegt. Die Pufferzonen weisen jeweils die Form eines Parallelogramms auf. In Fig. 3 gilt: PB3<PB1< PB2.

Im vorliegenden Beispiel errechnet sich der Flächeninhalt $A_Z$ einer Pufferzone für eine Schutzzone Z durch die folgende Formel:

$$A_Z = k \cdot SW \cdot D_Z \cdot \sin(\alpha)$$

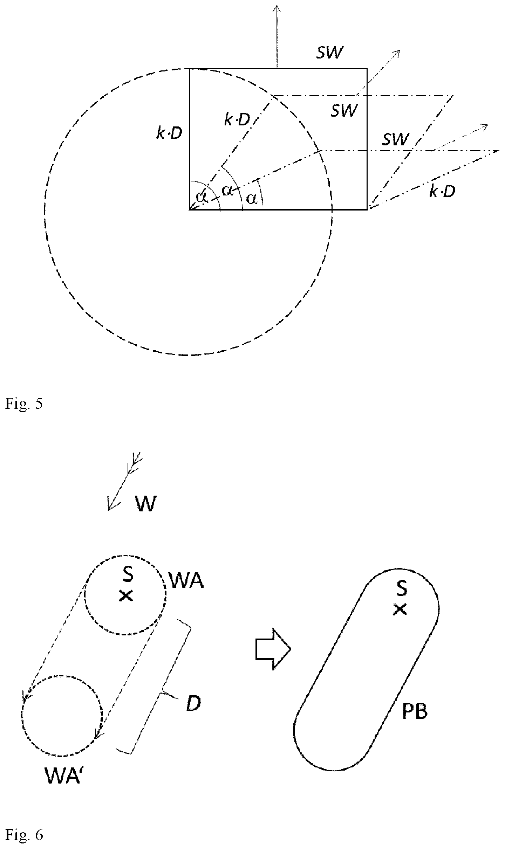

Dabei ist $SW$ die Sprühbreite, $D_Z$ der Mindestabstand, der zu der Schutzzone Z eingehalten werden muss/soll, und $\alpha$ der Winkel zwischen der Richtung der Luftbewegung und der Ausdehnungsrichtung des Sprühbalkens. Üblicherweise ist der Sprühbalken senkrecht zur Bewegungsrichtung der Sprühvorrichtung angeordnet, d.h. üblicherweise gilt: $\alpha = \beta - 90°$, wobei β der Winkel zwischen der Bewegungsrichtung des Windes und der Bewegungsrichtung der Sprühvorrichtung ist. Der Parameter $k$ ist ein Faktor, der abhängig von dem verwendeten Sprühmittel und/oder abhängig von der verwendeten Sprühdüse und/oder abhängig von den Applikationsparametern und/oder abhängig von der Windgeschwindigkeit und/oder abhängig von der Bewegungsgeschwindigkeit der Sprühvorrichtung sein kann. Die beschriebenen Zusammenhänge sind noch einmal beispielhaft und schematisch in Fig. 5 für eine Pufferzone dargestellt. Die drei in Fig. 5 gezeigten Pfeile zeigen verschiedene Windrichtungen an. Der Parameter $SW$ gibt die Sprühbreite an. Diese ist unabhängig von der Windrichtung. Der Parameter $D$ repräsentiert den Mindestabstand der zu der Pufferzone korrespondierenden Schutzzone. Das Produkt $k \cdot D$ ist ebenfalls von der Windrichtung unabhängig. Dadurch, dass sich die Windrichtung ändert, ändert sich der Winkel $\alpha$ zwischen der Sprühbreite und der Windrichtung und damit auch die Orientierung der Pufferzone und der Flächeninhalt der Pufferzone. Es ist denkbar, dass der Flächeninhalt mit der Windgeschwindigkeit korreliert; es ist denkbar, dass der Flächeninhalt steigt, wenn die Windgeschwindigkeit zunimmt.

Die in Fig. 3, Fig. 4 und Fig. 5 gezeigten Pufferzonen stellen eine konkrete Ausführungsform der vorliegenden Erfindung dar. In den in Fig. 3, Fig. 4 und Fig. 5 gezeigten Beispielen wurde (für jede vorhandene Schutzzone) eine Pufferzone für alle Sprühdüsen gemeinsam ermittelt. Vorzugsweise werden separate Pufferzonen für Gruppen von Sprühdüsen oder für einzelne Sprühdüsen ermittelt. Dies ist beispielhaft und schematisch in Fig. 6, Fig. 7, Fig. 8 und Fig. 9 gezeigt.

Fig. 6 zeigt schematisch ein Beispiel für die Bestimmung einer Pufferzone für eine Schutzzone. Für die Schutzzone ist ein Mindestabstand $D$ vorgegeben, der bei einer Applikation eines Sprühmittels eingehalten werden muss/soll. In dem in Fig. 6 gezeigten Beispiel wird eine Pufferzone für eine einzelne Sprühdüse ermittelt. Die Position der Sprühdüse S ist mit einem x markiert. Für die Sprühdüse S wird eine Benetzungsfläche WA bestimmt. Bei einer solchen Benetzungsfläche kann es sich zum Beispiel um die Stillstandsbenetzungsfläche handeln, also um diejenige Fläche, die die Sprühdüse bei Stillstand der Sprühvorrichtung mit Sprühmittel benetzen würde. Im vorliegenden Beispiel ist die Benetzungsfläche WA ein Kreis um die Sprühdüse S. In einem nächsten Schritt wird die Windrichtung ermittelt. Diese wird im vorliegenden Beispiel durch den Pfeil W angezeigt. In einem nächsten Schritt wird die Benetzungsfläche WA in Windrichtung verschoben. Im vorliegenden Beispiel wird die Benetzungsfläche um den Betrag des Mindestabstands der korrespondierenden Schutzzone verschoben. Die Verschiebung wird in Fig. 6 durch die gestrichelten Pfeile und die resultierende verschobene Fläche WA' dargestellt. Bei der Verschiebung überstreicht die Benetzungsfläche WA eine Fläche PB. Diese Fläche PB stellt die Pufferzone für die Sprühdüse S dar.

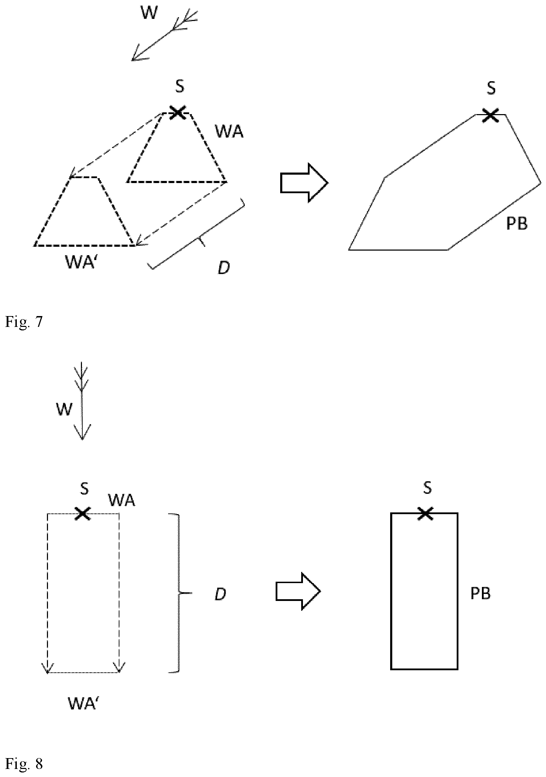

In Fig. 6 wurde eine kreisförmige Benetzungsfläche mit der Sprühdüse als Zentrum des Kreises definiert. Ebenso ist jede andere Form denkbar und es ist denkbar, die Benetzungsfläche in Bezug zur Position des Sprühdüse anders anzuordnen. Fig. 7, Fig. 8 und Fig. 9 zeigen weitere Beispiele für Benetzungsflächen und die daraus resultierenden Pufferzonen. Die Wahl (Definition) der Benetzungsfläche kann sich beispielsweise an der im Falle einer Applikation tatsächlich ergebenden Benetzungsfläche (die empirisch ermittelt werden kann) orientieren. Es ist denkbar, dass eine Form der Benetzungsfläche und eine Anordnung der Benetzungsfläche in Bezug zur mindestens einen Sprühdüse gewählt (konstruiert) wird, die der Realität möglichst nahekommt (Approximation). Ebenso ist es denkbar, eine Form zu wählen, die sich einfach und schnell mittels Computer erstellen und verschieben lässt, um den Rechenaufwand gering zu halten und eine Lösung zur Verfügung zu haben, die schnell auf veränderte Bedingungen reagiert. Denn bei jeder Bewegung der Sprühvorrichtung und/oder einer Veränderung der Luftbewegung sollten umgehend neue Pufferzonen auf Basis der veränderten Bedingungen berechnet werden, um Abdrift zu verhindern. Eine bevorzugte Form einer Benetzungsfläche, die sowohl der Realität nahekommt als auch eine schnelle Berechnung von Pufferzonen und eine schnelle Ermittlung von Überlappungen von Pufferzonen und Schutzzonen erlaubt, stellt ein Polygon dar. In Fig. 7 wurde für die Form der Benetzungsfläche ein Trapez gewählt - die resultierende Form der Pufferzone ist ein Hexagon. Ebenso ist es denkbar, für die Form der Benetzungsfläche ein Quadrat, ein Rechteck, ein Parallelogramm, ein Dreieck, ein Fünfeck, allgemein ein n-Eck (wobei n eine ganze Zahl größer als drei ist), ein Ellipsoid oder eine andere Form zu wählen. Die Benetzungsfläche muss auch nicht zwingend zweidimensional sein; denkbar ist auch eine eindimensionale Form wie in Fig. 8 dargestellt. Fig. 8 zeigt als ein weiteres Beispiel die Konstruktion einer Pufferzone ausgehend von einer geraden Linie WA als Benetzungsfläche. Die resultierende Pufferzone hat die Form eines Rechtecks (wie in Fig. 8 gezeigt), oder die Form eines Parallelogramms für den Fall, dass die Windrichtung schräg (nicht in einem Winkel von 90° oder 0°) zur Linie WA verläuft. Es ist auch denkbar, eine gekrümmte Benetzungsfläche zu wählen.

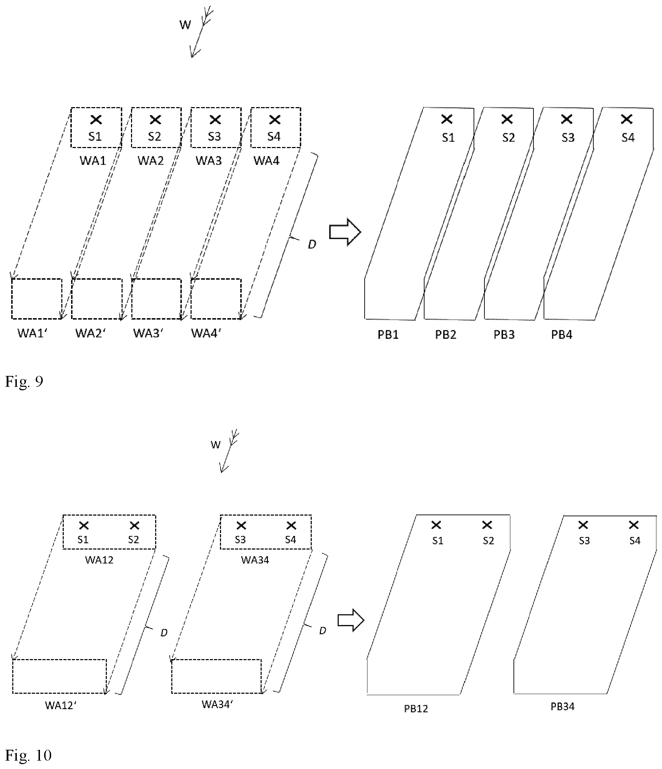

Figur 9 zeigt beispielhaft und schematisch die Konstruktion von Pufferzonen für eine Anordnung von Sprühdüsen. Im vorliegenden Beispiel sind vier Sprühdüsen S1, S2, S3 und S4 entlang einer geraden Linie in gleichbleibendem Abstand zueinander angeordnet. Für jede Sprühdüse ist eine Benetzungsfläche in Form eines Rechtecks definiert. Die Benetzungsflächen tragen die Bezugszeichen WA1, WA2, WA3 und WA4. Jede Benetzungsfläche ist um den Betrag des Mindestabstands D in Windrichtung (angezeigt durch den Pfeil W) verschoben; es ergeben sich die resultierenden Flächen WA1', WA2', WA3' und WA4'. Bei der Verschiebung überstreichen die Flächen WA1, WA2, WA3 und WA4 jeweils eine Fläche, die jeweils einer Pufferzone gleichgesetzt wird. Die Pufferzonen haben im vorliegenden Beispiel die Form eines Hexagons und tragen die Bezugszeichen PB1, PB2, PB3 und PB 4. Im vorliegenden Beispiel überlappen die Pufferzonen (PB1 mit PB2, PB2 mit PB1 und PB3, PB3 mit PB3 und PB4, PB4 mit PB3). Eine solche Überlappung ist jedoch nicht zwingend. In dem in Fig. 9 gezeigten Beispiel wurde für jede Sprühdüse eine Pufferzone ermittelt. Ebenso ist es denkbar, eine Pufferzone für eine Gruppe von Sprühdüsen zu konstruieren. Dies ist beispielhaft und schematisch in Fig. 10 dargestellt. Figur 10 zeigt beispielhaft und schematisch die Konstruktion von Pufferzonen für eine Gruppen von Sprühdüsen. Im vorliegenden Beispiel sind vier Sprühdüsen S1, S2, S3 und S4 entlang einer geraden Linie angeordnet. Für die Sprühdüsen S1 und S2 ist eine gemeinsame Benetzungsfläche WA12 definiert. Für die Sprühdüsen S3 und S4 ist eine gemeinsame Benetzungsfläche WA34 definiert. Die Benetzungsflächen WA12 und WA34 werden jeweils in Windrichtung um den Betrag des Mindestabstands $D$ verschoben. Die Benetzungsflächen WA12 und WA34 überstreichen bei der Verschiebung jeweils eine Fläche, die als Pufferzone gesetzt wird. Die für die Sprühdüsen S1 und S2 resultierende Pufferzone ist mit dem Bezugszeichen PB12 gekennzeichnet; die für die Sprühdüsen S3 und S4 resultierende Pufferzone ist mit dem Bezugszeichen PB34 gekennzeichnet.

In den in Fig. 6, Fig. 7, Fig. 8, Fig. 9 und Fig. 10 gezeigten Beispielen wurden die Benetzungsflächen um den Betrag des Mindestabstands $D$ in Windrichtung verschoben. Ebenso ist es denkbar, dass die Benetzungsflächen um den Betrag $p \cdot D$ verschoben werden, wobei $D$ weiterhin der Mindestabstand der entsprechenden Schutzzone ist und $p$ ein Parameter ist, der zum Beispiel mit der Windgeschwindigkeit und/oder der Bewegungsgeschwindigkeit der Sprühvorrichtung und/oder einem anderen Applikationsparameter korreliert.

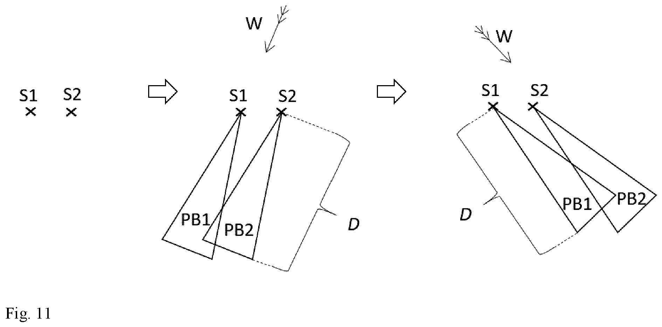

In den in Fig. 6, Fig. 7, Fig. 8, Fig. 9 und Fig. 10 gezeigten Beispielen wurden zur Konstruktion der Pufferzonen jeweils die Benetzungsflächen definiert und diese um den Betrag des Mindestabstands $D$ in Windrichtung verschoben. Ebenso ist es denkbar, Pufferzonen unabhängig von einer Benetzungsfläche zu definieren und zu erzeugen. Dies ist beispielhaft und schematisch in Fig. 11 dargestellt.

Fig. 11 zeigt ein Beispiel für die Konstruktion einer Pufferzone für zwei Sprühdüsen, die in einem Abstand zueinander angeordnet sind. Die Sprühdüsen tragen die Bezugszeichen S1 und S2. In einem ersten Schritt wird die Windrichtung ermittelt. Diese wird in Fig. 11 durch den Pfeil W angezeigt. In einem weiteren Schritt werden Pufferzonen erzeugt, die sich ausgehend von den Sprühdüsen in Windrichtung erstrecken. Die Pufferzonen tragen die Bezugszeichen PB1 und PB2. Die Pufferzonen haben im vorliegenden Beispiel die Form eines (gleichschenkligen) Dreiecks, wobei die Höhe des Dreiecks (die Höhe zwischen den gleich langen Schenkeln) dem Betrag des Mindestabstands $D$ entspricht. Auch hier sind andere Form für die Pufferzonen denkbar, wie beispielsweise ein Rechteck, ein Trapez und viele andere. In einer bevorzugten Ausführungsform ist die Form der Pufferzone spiegelsymmetrisch, wobei die Spiegelsymmetrieachse entlang der Windrichtung verläuft und eine Länge aufweist, die dem Mindestabstand $D$ entspricht. In einer bevorzugten Ausführungsform hat die Pufferzone die Form eines Polygons, wobei mindestens eine Seite (Kante) des Polygons entlang der Windrichtung verläuft und eine Länge aufweist, die dem Mindestabstand $D$ entspricht.

Da sich eine Sprühvorrichtung während der Applikation eines Sprühmittels bewegt, ändert sich fortlaufend die Position der Sprühvorrichtung und damit auch die Position der mindestens einen Sprühdüse und damit auch die Position einer jeden Pufferzone.

Ferner kann sich die Richtung und/oder die Geschwindigkeit der Luft, die die Sprühvorrichtung umgibt, ebenfalls fortlaufend ändern. Ändert sich die Richtung der Luftbewegung, dann ändert sich die Orientierung der Pufferzone und ggf. auch der Flächeninhalt der Pufferzone. Die Pufferzone erstreckt sich stets von der mindestens einen Sprühdüse in Richtung der Luftbewegung. Dabei bedeutet der Begriff "erstrecken" wie die vorangegangenen Beispiele zeigen, dass die Pufferzone mindestens eine Seite oder eine Höhe aufweist, die parallel zur Richtung der Luftbewegung orientiert ist. Üblicherweise weist diese Seite eine Länge auf, die dem Mindestabstand $D$ der korrespondierenden Schutzzone entspricht oder zumindest mit diesem korreliert.

Die vorliegende Erfindung trägt dem Umstand Rechnung, dass sich die Pufferzonen fortlaufend ändern können. Die Pufferzonen werden daher fortlaufend und automatisiert neu berechnet. "Fortlaufend" (synonym: kontinuierlich) bedeutet in diesem Zusammenhang eine neue Berechnung mindestens alle 10 Sekunden, vorzugsweise mindestens alle 5 Sekunden. Es ist denkbar, dass die Frequenz der Neuberechnung an die Bewegungsgeschwindigkeit der Sprühvorrichtung und/oder an die Geschwindigkeit der Luftbewegung gekoppelt ist, und zwar vorzugsweise so, dass die Frequenz der Neuberechnung steigt, wenn die Bewegungsgeschwindigkeit steigt und/oder die Geschwindigkeit der Luftbewegung steigt. Es ist denkbar, dass die Neuberechnung an die Geschwindigkeit der Erfassung und/oder Ermittlung der Daten, die zur Berechnung der Pufferzonen verwendet werden, gekoppelt ist. Es ist denkbar, dass immer dann eine Neuberechnung erfolgt, wenn neue Daten erfasst und/oder übermittelt worden sind.

Für jede neu berechnete Pufferzone wird (ebenfalls automatisiert und fortlaufend) geprüft, ob die Pufferzone mit der korrespondierenden Schutzzone überlappt. Bei einer solchen Überlappung besteht die Gefahr, dass Sprühmittel in die Schutzzone gelangt.

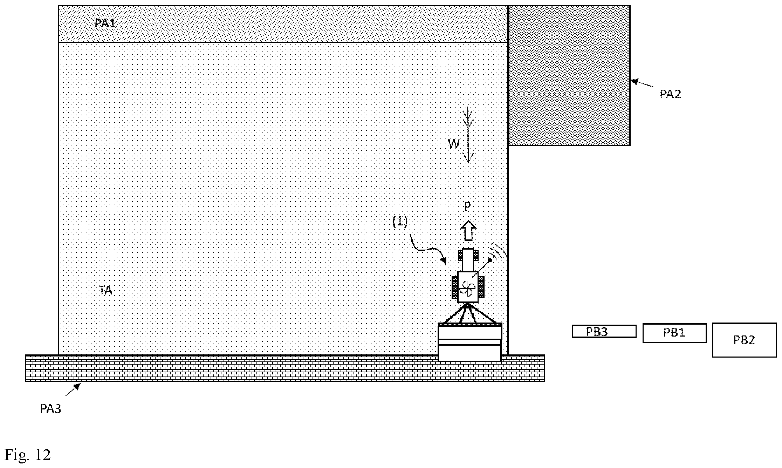

Fig. 12 zeigt beispielhaft und schematisch die Sprühvorrichtung (1) aus Fig. 2, die sich in dem Zielgebiet (TA) aus Fig. 1 bewegt. Die Bewegungsrichtung wird durch den Pfeil P angezeigt. Wind ist der Bewegungsrichtung der Sprühvorrichtung (1) entgegengesetzt gerichtet (dargestellt durch den Pfeil W). Es erstrecken sich drei Pufferzonen (PB1, PB2, PB3) von dem Sprühbalken der Sprühvorrichtung (1) in die Richtung, in die sich der Wind bewegt. Die Flächeninhalte der Pufferzonen korrelieren mit den Mindestabständen der Schutzzonen (PA1, PA2, PA3). Jede Pufferzone hat zwei Seiten, die parallel zur Windrichtung orientiert sind und deren Länge vorzugsweise den Mindestabständen zu den Schutzzonen entsprechen (PA1, PA2, PA3). Die Mindestabstände sind Fig. 1 zu entnehmen; sie sind der Übersichtlichkeit halber in Fig. 12 nicht gezeigt. Im vorliegenden Beispiel kommt es zu einer Überlappung der Pufferzone PB2 mit der Schutzzone PA3. Da die Pufferzone PB2 jedoch nicht mit der Schutzzone PA3 korrespondiert, ist diese Überlappung unkritisch. Im vorliegenden Beispiel kommt es zu keiner Überlappung einer Pufferzone mit der korrespondierenden Schutzzone: PB1 überlappt nicht mit PA1, PB2 überlappt nicht mit PA2 und PB3 überlappt nicht mit PA3.

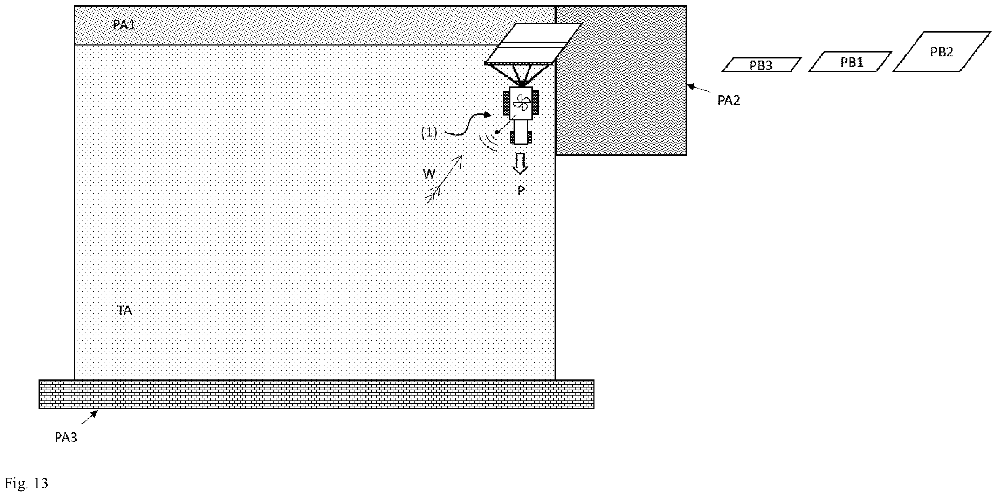

Fig. 13 zeigt beispielhaft und schematisch die Sprühvorrichtung (1) aus Fig. 2, die sich in dem Zielgebiet (TA) aus Fig. 1 bewegt. Im Vergleich zu Fig. 12 hat sich die Situation wie folgt verändert: Die Sprühvorrichtung bewegt sich in eine andere Richtung (dargestellt durch den Pfeil P). Der Wind bewegt sich in eine andere Richtung (dargestellt durch den Pfeil W). Es kommt zu einer Überlappung der Pufferzone PB3 mit der Schutzzone PA2. Dies ist unkritisch, da die Pufferzone PB3 nicht mit der Schutzzone PA2 korrespondiert. Es kommt zu einer Überlappung der Pufferzone PB1 mit der Schutzzone PA2. Dies ist unkritisch, da die Pufferzone PB1 nicht mit der Schutzzone PA2 korrespondiert. Es kommt zu einer Überlappung der Pufferzone PB2 mit der Schutzzone PA1. Dies ist unkritisch, da die Pufferzone PB2 nicht mit der Schutzzone PA1 korrespondiert. Es kommt zu einer Überlappung zwischen der Pufferzone PB1 und der Schutzzone PA1. Dies ist kritisch, da die Pufferzone PB1 und die Schutzzone PA1 miteinander korrespondieren. Es kommt zu einer Überlappung zwischen der Pufferzone PB2 und der Schutzzone PA2. Dies ist kritisch, da die Pufferzone PB2 und die Schutzzone PA2 miteinander korrespondieren.

Eine Überlappung einer Pufferzone mit einer korrespondierenden Schutzzone soll/muss verhindert werden, da hierdurch Sprühmittel in die Schutzzone gelangen kann.

Es werden also Maßnahmen getroffen, um die Überlappung zu verhindern bzw. um die Gefahr des Verfrachtens von Sprühmittel in eine Schutzzone zu mindern. Üblicherweise betrifft eine solche Maßnahme eine Änderung von einem oder mehreren Applikationsparametern.

Eine solche Maßnahme kann beispielsweise darin bestehen, dass der Sprühvorgang unterbrochen wird, d.h. es wird kein Sprühmittel mehr ausgebracht.

Eine solche Maßnahme kann darin bestehen, dass eine oder mehrere Sprühdüsen verschlossen werden. Über diese Sprühdüsen wird kein Sprühmittel mehr ausgegeben. Eine verschlossene Sprühdüse hat entweder keine Pufferzone oder eine Pufferzonen mit einer geringeren Ausdehnung in Windrichtung als eine geöffnete. Durch ein Verschließen der Sprühdüsen oder dem Schließen eines Ventils vor einer Sprühdüse kann also eine Überlappung von Pufferzone und Schutzzone verhindert werden.

Eine solche Maßnahme kann darin bestehen, dass die Düsenöffnung einer oder mehrerer Sprühdüsen verändert wird und/oder der Druck vor der Düsenöffnung verändert wird, um die Verteilung des austretenden Sprühmittels und/oder die Tropfengröße des austretenden Sprühmittels und/oder die Geschwindigkeit, mit der Sprühmittel austritt, zu verändern, damit das Sprühmittel sich schneller zum Erdboden bewegt und weniger anfällig gegenüber Wind ist.

Eine solche Maßnahme kann in dem Wechsel einer oder mehrerer Sprühdüsen bestehen. Oftmals sind mehrere Sprühdüsen z.B. in Form eines Revolvers an einem Sprühköpf angebracht. Die Sprühdüsen an dem Sprühkopf können unterschiedliche Sprühcharakteristiken aufweisen; es ist z.B. denkbar, dass es eine Standarddüse und eine oder mehrere spezielle Sprühdüsen wie beispielsweise driftreduzierende Düsen gibt.

Eine weitere Maßnahme kann in der Verringerung der Bewegungsgeschwindigkeit der Sprühvorrichtung bestehen.

Eine weitere Maßnahme kann darin bestehen, das Sprühmittel zu wechseln. Für verschiedene Sprühmittel können verschiedene Mindestabstände, die gegenüber Schutzzonen einzuhalten sind, gelten. Dementsprechend können sich verschiedene Sprühmittel durch verschieden große Pufferzonen auszeichnen. Es ist also denkbar, dass sich durch die Wahl eines Sprühmittels mit einer kleineren Pufferzone eine Überlappung verhindern lässt.

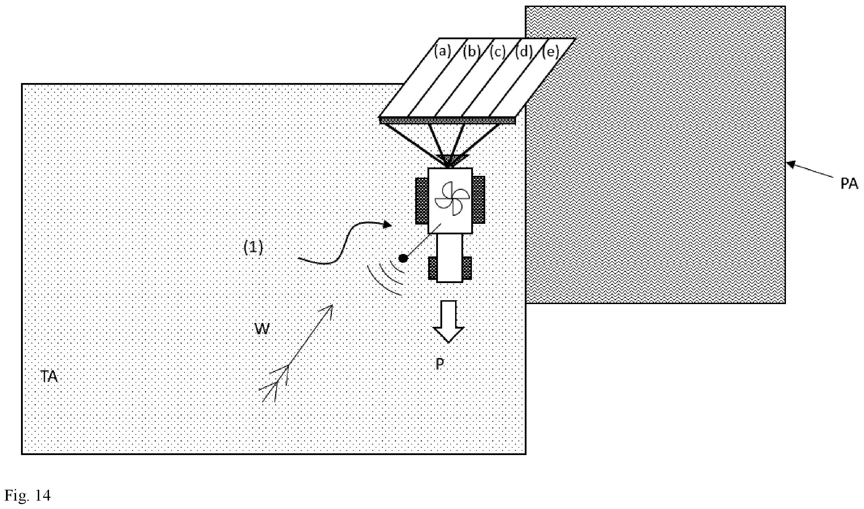

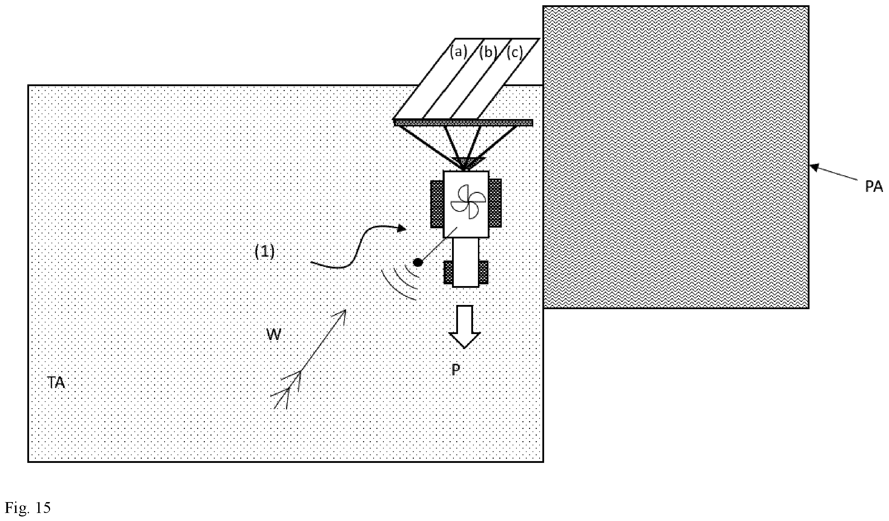

Fig. 14 und Fig. 15 zeigen beispielhaft und schematisch eine Veränderung von Applikationsparametern zur Verhinderung einer Überlappung einer oder mehrerer Pufferzonen mit einer korrespondierenden Schutzzone. In Fig. 14 und Fig. 15 ist die Sprühvorrichtung (1) aus Fig. 2 dargestellt, die sich in dem Zielgebiet (TA) aus Fig. 1 bewegt. Die Sprühvorrichtung bewegt sich in die durch den Pfeil P dargestellte Richtung. Der Wind bewegt sich in die durch den Pfeil W dargestellte Richtung. Die Sprühvorrichtung weist fünf Sprühdüsen oder fünf Gruppen von Sprühdüsen auf, die an einem Sprühbalken angebracht sind (die Sprühdüsen sind in Fig. 14 und Fig. 15 nicht explizit dargestellt). Für jede Sprühdüse oder Gruppe von Sprühdüsen ist eine Pufferzone ermittelt worden (siehe Fig. 14). Die Pufferzonen haben die Form von Parallelogrammen und erstrecken sich von den Sprühdüsen (oder Gruppen von Sprühdüsen) in Windrichtung. Jedes Parallelogramm weist zwei Seiten auf, die parallel zur Windrichtung orientiert sind. Die Länge dieser Seiten korreliert vorzugsweise mit dem Mindestabstand, der zur Schutzzone PA eingehalten werden muss/soll; besonders bevorzugt ist die Länge der Seiten gleich dem Mindestabstand. Die Pufferzonen sind mit den Bezugzeichen (a), (b), (c), (d) und (e) versehen. Die Pufferzonen (d) und (e) überlappen mit der korrespondierenden Schutzzone PA (siehe Fig. 14). Um diese Überlappung zu verhindern, können die Applikationsparameter in der Weise geändert werden, dass die Sprühdüsen mit den Pufferzonen (d) und (e) abgeschaltet werden. Ein Abschalten der Sprühdüsen führt dazu, dass kein Sprühmittel mehr über diese Sprühdüsen appliziert wird. Dementsprechend fallen die Pufferzonen für diese Sprühdüsen weg. Dies ist in Fig. 15 gezeigt; aufgrund des Abschaltens der Sprühdüsen sind die Pufferzonen (d) und (e) weggefallen; es verbleiben die Pufferzonen (a), (b) und (c). Diese überlappen nicht mit der korrespondierenden Schutzzone PA. Eine Abdrift in die Schutzzone PA wird verhindert.

In einer bevorzugten Ausführungsform wird zusätzlich zu den von Luftbewegungen abhängigen Pufferzonen eine von Luftbewegungen unabhängige Pufferzone ermittelt. Diese wird vorzugsweise für Gewässer in, an und/oder in der Nähe eines Zielgebiets, bzw. die an die Gewässer angrenzenden Filterstreifen, ermittelt. Beim Anbau von Kulturpflanzen wird üblicherweise zwischen dem Feld für die Kulturpflanzen und dem Gewässer ein Grünstreifen gepflanzt, der als Filter für Pflanzenschutzmittel und/oder Dünger fungieren kann und der in dieser Beschreibung auch als Filterstreifen bezeichnet wird (engl: *vegetated filter strip*). Niederschläge auf dem Feld können Pflanzenschutzmittel und/oder Dünger aufnehmen. Der Filterstreifen kann verhindern, dass das mit Pflanzenschutzmittel und/oder Dünger angereicherte abfließende Wasser zu einem Verfrachten von ungewünschten Substanzen in das Gewässer kommt, indem er die unerwünschten Substanzen herausfiltert. Eine Applikation von Sprühmittel in einem solchen Filterstreifen soll verhindert werden. Dies wird durch die von Luftbewegungen (insbesondere Winden) unabhängige Pufferzone erreicht.

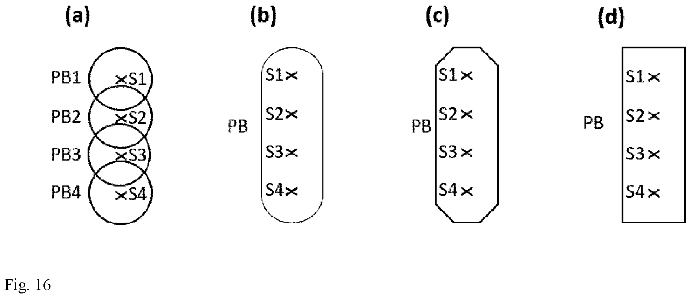

Die Konstruktion einer Pufferzone für einen Filterstreifen ist beispielhaft und schematisch in Fig. 16 gezeigt. Fig. 16 (a), Fig. 16 (b), Fig. 16 (c) und Fig 16 (d) zeigen vier verschiedene Beispiele für luftbewegungsunabhängige Pufferzonen. In allen Fällen sind vier Sprühdüsen S1, S2, S3 und S4 vorhanden, deren Position durch ein x gekennzeichnet ist. Im Fall von Fig. 16 (a) gibt es für jede Sprühdüse eine eigene Pufferzone (PB1, PB2, PB3, PB4). Jede Pufferzone hat die Form eines Kreises mit der Position der Sprühdüse als Kreismittelpunkt. Der Radius des Kreises entspricht vorzugsweise mindestens der Breite des Filterstreifens. Der Filterstreifen besitzt üblicherweise eine definierte Breite $B$. Dabei ist die Breite $B$ vorzugsweise der Abstand zwischen der äußeren Feldgrenze und der äußeren Gewässergrenze. Die Breite $B$ des Filterstreifens kann über die Länge des Filterstreifens variieren. Im Fall von Fig. 16 (b), Fig. 16 (c) und Fig. 16 (d) gibt es eine einzige Pufferzone für alle vier Sprühdüsen. Im Fall von Fig. 16 (b) hat die Pufferzone die Form von zwei Halbkreisen, die in einem Abstand voneinander, zueinander spiegelbildlich angeordnet sind, wobei die losen Enden der Halbkreise durch Geraden miteinander verbunden sind. Die Positionen der Sprühdüsen S1 und S4 entsprechen vorzugsweise den Kreismittelpunkten der zwei Halbkreise. Die Radien der Halbkreise entsprechen vorzugsweise mindestens der Breite des Filterstreifens. Die Pufferzone PB in Fig. 16 (b) hat die Form einer Einhüllenden der Kreise in Fig. 16 (a). Im Fall von Fig. 16 (c) wird die Form der Einhüllenden aus Fig. 16 (b) durch ein Oktagon approximiert; im Fall von Fig. 16 (d) wird die Form der Einhüllenden aus Fig. 16 (b) durch ein Rechteck approximiert. Auch andere Formen, insbesondere andere Polygone sind denkbar. Die Form und Größe einer Pufferzone für Filterstreifen kann beispielsweise so gewählt werden, dass der Abstand der Position der mindestens einen Sprühdüse zu den äußeren Rändern niemals kleiner als ein vorgegebener Wert ist aber gleichzeitig klein gehalten wird. Der vorgegebene Wert kann beispielsweise die Breite $B$ des Filterstreifens oder eine damit korrelierende Größe sein.

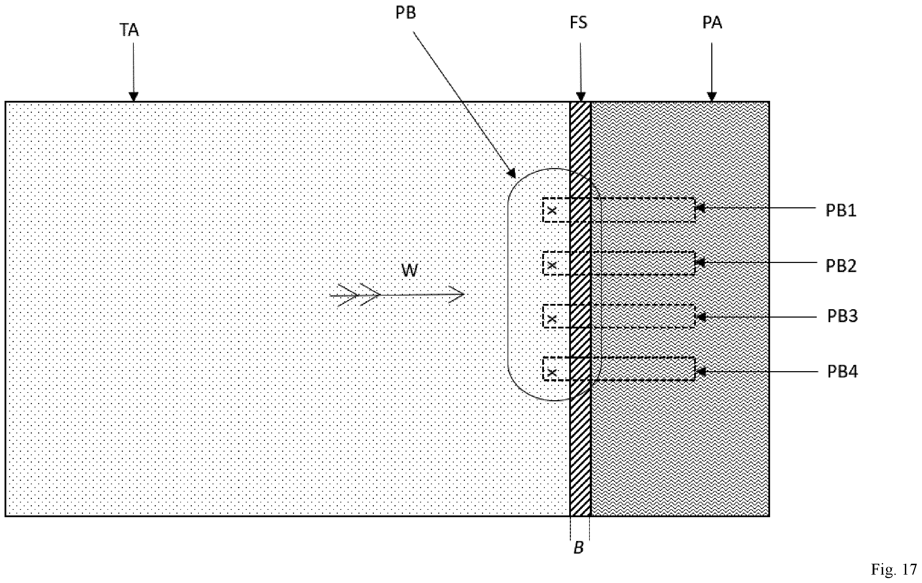

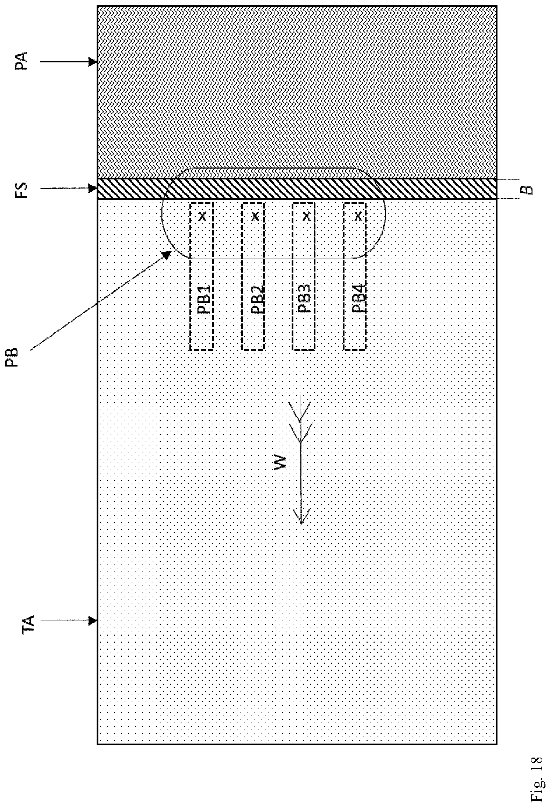

Fig. 17 und Fig. 18 zeigen beispielhaft und schematisch zwei verschiedene Situationen beim Applizieren von Sprühmittel in einem Zielgebiet in der Nähe eines Filterstreifens. Das Zielgebiet TA ist durch den Filterstreifen FS von einer (weiteren) Schutzzone PA getrennt. In dem Zielgebiet TA befindet sich eine Sprühvorrichtung mit einer Anordnung von vier Sprühdüsen. Von der Sprühvorrichtung sind lediglich die Positionen der vier Sprühdüsen durch Kreuze x markiert. Den Sprühdüsen ist eine einzige luftbewegungsunabhängige Pufferzone PB zugeordnet. Die Anordnung der vier Sprühdüsen und der Pufferzone entspricht derjenigen aus Fig. 16 (b). Zusätzlich gibt es für jede der Sprühdüsen noch eine weitere Pufferzone (PB1, PB2, PB3, PB4). Diese weiteren Pufferzonen korrespondieren mit der Schutzzone PA, bei der es sich im vorliegenden Beispiel um ein Gewässer handelt. Der Pfeil W zeigt die Windrichtung an. Die Pufferzonen PB1, PB2, PB3 und PB4 erstrecken sich ausgehend von den Sprühdüsen in Windrichtung; ihre Ausdehnung in Windrichtung entspricht vorzugsweise dem Mindestabstand der Schutzzone PA. Es kommt zu einer Überlappung der Pufferzonen PB1, PB2, PB3 und PB4 mit der korrespondierenden Schutzzone PA. Es müssen also Maßnahmen ergriffen werden, um Abdrift in der Schutzzone PA zu verhindern. Im vorliegenden Fall kann diese Maßnahme beispielsweise darin bestehen, dass alle Sprühdüsen geschlossen werden, so dass kein Sprühmittel austritt. Fig. 18 zeigt die gleiche Anordnung wie Fig. 17, mit dem Unterschied, dass der Wind nun aus der entgegengesetzten Richtung kommt und die Pufferzonen PB1, PB2, PB3 und PB4 dementsprechend ebenfalls entgegengesetzt zur vorherigen (in Fig. 17 gezeigten) Richtung orientiert sind. Die Orientierung der Pufferzone PB hat sich nicht verändert; sie ist unabhängig von der Windrichtung. Es kommt zu keiner Überlappung der Pufferzonen PB1, PB2, PB3 und PB4 mit der korrespondierenden Schutzzone PA. Es könnte an dieser Position im Zielgebiet TA also Sprühmittel appliziert werden, da die Gefahr von Abdrift in der Schutzzone PA gering ist. Eine Applikation von Sprühmittel an dieser Position im Zielgebiet könnte jedoch dazu führen, dass Sprühmittel in den Filterstreifen gelangt. Die Überlappung der Pufferzone PB mit dem Filterstreifen und der Schutzzone PA zeigt diese Gefahr an. Bei einer Überlappung der Pufferzonen PB mit dem Filterstreifen und/oder der Schutzzone PA können Maßnahmen ergreifen werden, um eine solche Überlappung zu verhindern.

Vorzugsweise wird ein Sprühvorgang in einem Zielgebiet aufgezeichnet. Bei einer solchen Aufzeichnung werden Daten erfasst und gespeichert. Daten, die erfasst und gespeichert werden, sind vorzugsweise für jede Position der Sprühvorrichtung in dem Zielgebiet die jeweils herrschende Windrichtung sowie die Sprühdüsen, die an der Position Sprühmittel ausgeben. Weitere Daten, die erfasst und gespeichert werden können sind die (jeweils an den Positionen der Sprühvorrichtung vorliegende) Bewegungsgeschwindigkeit der Sprühvorrichtung, Applikationsparameter (welches Sprühmittel wird in welcher Menge wie ausgegeben), Abstände zu Schutzzonen, Größe und Form von Pufferzonen und/oder dergleichen.

Durch die Erfassung und Speicherung der Daten kann der Sprühvorgang dokumentiert werden, so dass die Möglichkeit besteht, zum Beispiel gegenüber einer Behörde darzulegen, dass infolge der dynamischen Driftkontrolle gemäß der vorliegenden Erfindung das Risiko einer Abdrift in einer Schutzzone zu jedem Zeitpunkt eines Applikationsvorgangs wirksam minimiert werden konnte.

Ferner kann z.B. der Nutzer der Sprühvorrichtung erkennen, an welchen Stellen im Zielgebiet welche Mengen an Sprühmittel ausgebracht wurden. Wurde in einem Bereich aufgrund eines Risikos von Abdrift kein Sprühmittel oder weniger Sprühmittel als beabsichtigt ausgetragen, kann der Nutzer entscheiden, ob er in diesem Bereich zu einem späteren Zeitpunkt, wenn sich zum Beispiel die Windverhältnisse geändert haben, Sprühmittel ausbringen wird, oder ob er alternative Maßnahmen ergreifen wird. Denkbar ist auch, dass die Bereiche, in denen kein oder zu wenig Sprühmittel ausgebracht worden ist, automatisch von einer oder mehreren Drohnen angeflogen und/oder von einem oder mehreren Robotern aufgesucht werden, um Maßnahmen in diesen Bereichen zu ergreifen, die das Nichtausbringen bzw. das zu-wenig-Ausbringen des Sprühmittels ausgleichen.

Ebenso ist es denkbar, dass auf Basis der erfassten und gespeicherten Daten geprüft wird, welche Konsequenzen sich aus dem Nichtausbringen und/oder dem zu-wenig-Ausbringen ergeben, um zukünftige Applikationsvorgänge daran anzupassen. Es ist denkbar, dass Bereiche, in denen zu wenig oder gar kein Sprühmittel appliziert worden ist, auch in Zukunft nicht mehr besprüht werden, da sich das Besprühen nicht mehr lohnt. Ebenfalls ist denkbar, dass ein Bereich, in dem zu wenig oder gar kein Sprühmittel appliziert worden ist, bei einer folgenden Applikation mit mehr Sprühmittel und/oder mit einem anderen Sprühmittel behandelt wird.

Ebenso ist es denkbar, dass auf Basis der erfassten und gespeicherten Daten eine optimierte Route für das Ausbringen von Sprühmittel ermittelt wird, wobei die Optimierung im Hinblick auf verschiedene Zielgrößen erfolgen kann, wie beispielsweise geringe Ausbringungszeit, kurze Wege, geringe Größe von Teilbereichen, in denen keine Ausbringung erfolgt und/oder dergleichen.

Ebenso ist es denkbar, dass auf Basis eines oder mehrerer Windsensoren vor Ausführung und/oder während der Ausführung des Applikationsvorgangs eine optimierte Route ermittelt wird. Steht der Wind beispielsweise zu Beginn des Applikationsvorgangs günstig in der Weise, dass eine Applikation nahe an einer Schutzzone erfolgen kann, ohne dass eine Gefahr von Abdrift besteht, kann das erfindungsgemäße Computersystem eine Route vorschlagen, bei der eine Applikation nahe der Schutzzone als erstes erfolgt. Ebenso ist es denkbar, die Route während des Applikationsvorgangs an veränderliche Windverhältnisse anzupassen, um einen möglichst großen Anteil des Zielgebiets mit Sprühmittel zu versehen.

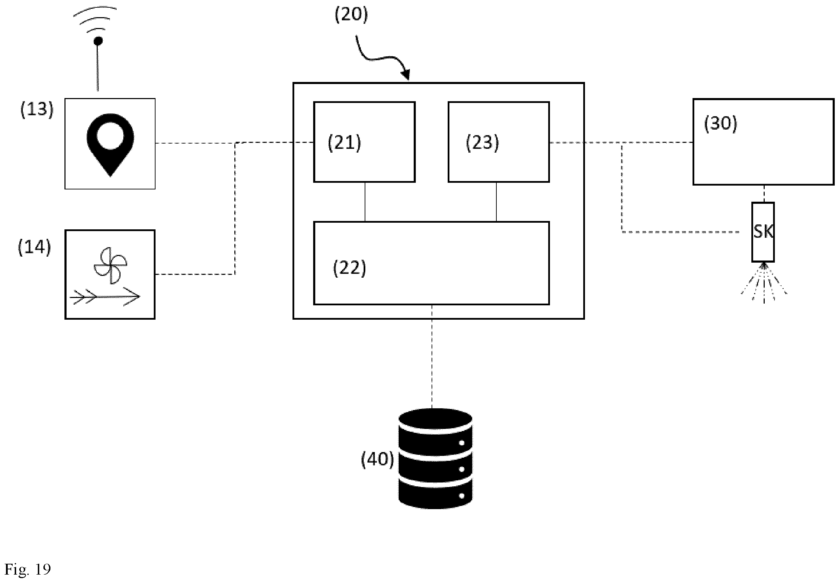

Fig. 19 zeigt schematisch eine Ausführungsform des erfindungsgemäßen Computersystems. Das Computersystem (20) umfasst eine Empfangseinheit (21), eine Steuer- und Recheneinheit (22) und eine Ausgabeeinheit (23).

Über die Empfangseinheit (21) kann die Bedienung des Computersystems (20) erfolgen, d.h. es können Befehle und/oder Informationen über ein oder mehrere Eingabemittel (z.B. Tastatur, Maus, Mikrofon, Touchscreen und/oder dergleichen) eingegeben werden. Ferner empfängt die Empfangseinheit (21) Informationen zur Position einer oder mehrerer Sprühvorrichtungen und/oder Sprühdüsen von einem oder mehreren Positionsbestimmungseinheiten (13) über ein oder mehrere Netzwerke oder direkt, kabelgebunden und/oder über Funk. Ferner empfängt die Empfangseinheit (21) Informationen zur Richtung einer oder mehreren Luftbewegungen (z.B. Wind) und optional zur Geschwindigkeit der Luftbewegung(en) von einem oder mehreren Luftbewegungssensoren (14) über ein oder mehrere Netzwerke oder direkt, kabelgebunden und/oder über Funk.

Die Steuer- und Recheneinheit (22) ist konfiguriert, anhand der Daten Pufferzonen wie in der vorliegenden Beschreibung beschrieben zu ermitteln, und zu prüfen, ob eine oder mehrere Pufferzonen mit einer oder mehreren korrespondierenden Schutzzonen überlappen. Die Steuer- und Recheneinheit (22) ist konfiguriert, im Falle einer Überlappung, die Ausgabeeinheit (23) zu veranlassen, ein oder mehrere Signale auszugeben, die zu einer Veränderung von Applikationsparametern führen. Dabei ist es denkbar, dass die Signale direkt an Komponenten (SK) zum Ausbringen von Sprühmittel (z.B. Ventil, Pumpe und/oder dergleichen) übermittelt werden und/oder an eine separate Steuereinheit (30) für das Ausbringen von Sprühmittel übermittelt werden, die ihrerseits dann die Komponenten (SK) ansteuert.

Über die Ausgabeeinheit (23) können ferner Informationen gegenüber einem Nutzer des Computersystems ausgegeben werden (z.B. über einen Monitor, einen Drucker, einen Lautsprecher und/oder dergleichen).

Das Computersystem (20) kann mit einem Datenspeicher (40) verbunden sein, um Informationen zu Applikationsvorgängen (z.B. zu Dokumentationszwecken) zu speichern. Der Datenspeicher (40) kann Bestandteil des Computersystems (20) sein und/oder mit diesem über ein oder mehrere Netzwerke verbunden sein.

Es ist denkbar, dass es mehr als eine Empfangseinheit, mehr als eine Steuer- und Recheneinheit, mehr als eine Ausgabeeinheit und mehr als einen Datenspeicher gibt.

Das Computersystem (20) kann Bestandteil der erfindungsgemäßen Sprühvorrichtung oder von dieser unabhängig sein.

Das Computersystem (20) ist durch das erfindungsgemäße Computerprogrammprodukt konfiguriert, die in dieser Beschreibung beschriebenen Aufgaben auszuführen.

**Patentansprüche**

1. Verfahren, umfassend die Schritte:

   - Applizieren eines Sprühmittels (SM) gemäß definierter Applikationsparameter in einem Zielgebiet (TA) mittels einer Sprühvorrichtung (1), wobei die Sprühvorrichtung (1) mindestens eine Sprühdüse (S, S1, S2, S3, S4) umfasst, wobei das Zielgebiet (TA) mindestens eine Schutzzone (PA, PA1, PA2, PA3) umfasst, und/oder an mindestens eine Schutzzone (PA, PA1, PA2, PA3) angrenzt und/oder in einer Nachbarschaft zu mindestens einer Schutzzone (PA, PA1, PA2, PA3) liegt, wobei jede vorhandene Schutzzone (PA, PA1, PA2, PA3) durch einen Mindestabstand ($D$, $D_1$, $D_2$, $D_3$) gekennzeichnet ist, der bei der Applikation des Sprühmittels mindestens einzuhalten ist,
   - während des Applizierens:

      o Bestimmen einer Richtung (W) einer Luftbewegung,
      o Bestimmen einer Position der mindestens einen Sprühdüse (S, S1, S2, S3, S4),
      o für jede vorhandene Schutzzone (PA, PA1, PA2, PA3): Ermitteln einer zur Schutzzone (PA, PA1, PA2, PA3) korrespondierenden Pufferzone (PB, PB1, PB2, PB3, PB4), wobei sich die korrespondierende Pufferzone (PB, PB1, PB2, PB3, PB4) von der mindestens einen Sprühdüse (S, S1, S2, S3, S4) in die Richtung (W) der Luftbewegung erstreckt,
      wobei die korrespondierende Pufferzone (PB, PB1, PB2, PB3, PB4) eine Ausdehnung in Richtung (W) der Luftbewegung aufweist, die mit dem Mindestabstand ($D$, $D_1$, $D_2$, $D_3$) korreliert,
      o Prüfen, ob eine Überlappung zwischen der mindestens einen Schutzzone (PA, PA1, PA2, PA3) und der mit ihr korrespondierenden Pufferzone (PB, PB1, PB2, PB3, PB4) vorliegt,
      ∘ im Fall einer Überlappung: Anpassen von Applikationsparametern zur Verhinderung der Überlappung,

   - Fortsetzen des Applizierens unter Verwendung der angepassten Applikationsparameter.

2. Verfahren nach Anspruch 1, wobei die Sprühvorrichtung (1) eine Mehrzahl an Sprühdüsen (S, S1, S2, S3, S4) umfasst, wobei für Gruppen von Sprühdüsen (S, S1, S2, S3, S4) und/oder für einzelne Düsen separate Pufferzonen (PB, PB1, PB2, PB3, PB4) ermittelt werden.

3. Verfahren nach einem der Ansprüche 1 bis 2, wobei zusätzlich zur Richtung (W) der Luftbewegung eine Luftbewegungsgeschwindigkeit bestimmt wird und die Ausdehnung der Pufferzone (PB, PB1, PB2, PB3, PB4) in die Richtung der Luftbewegung (W) mit der Luftbewegungsgeschwindigkeit korreliert.

4. Verfahren nach einem der Ansprüche 1 bis 3, wobei die Pufferzone (PB, PB1, PB2, PB3, PB4) die Form eines Polygons aufweist.

5. Verfahren nach einem der Ansprüche 1 bis 4, wobei der Schritt Ermitteln einer zur Schutzzone (PA, PA1, PA2, PA3) korrespondierenden Pufferzone (PB, PB1, PB2, PB3, PB4) die folgenden Teilschritte umfasst:

   - Ermitteln einer Benetzungsfläche (WA, WA1, WA2, WA3, WA4)
   - Verschieben der Benetzungsfläche (WA, WA1, WA2, WA3, WA4) in Richtung (W) der Luftbewegung um einen definierten Betrag
   - Ermitteln einer Fläche, die beim Verschieben überstrichen wird
   - Setzen der Fläche als Pufferzone (PB, PB1, PB2, PB3, PB4).

6. Verfahren nach Anspruch 5, wobei die Benetzungsfläche (WA, WA1, WA2, WA3, WA4) eine kreisrunde, elliptische, polygonale oder linienförmige Form aufweist.

7. Verfahren nach Anspruch 5, wobei die Benetzungsfläche (WA, WA1, WA2, WA3, WA4) einer Stillstandsbenetzungsfläche entspricht.

8. Verfahren nach einem der Ansprüche 1 bis 7, wobei es sich bei der Luftbewegung um Wind handelt.

9. Verfahren nach einem der Ansprüche 1 bis 8, wobei mindestens eine luftbewegungsunabhängige Pufferzone (PB, PB1, PB2, PB3, PB4) ermittelt wird, deren Ausdehnung ausgehend von der Position des mindestens einen Sprühdüse (S, S1, S2, S3, S4) mindestens der Breite (B) eines Filterstreifens entspricht, wobei während des Applizierens geprüft wird, ob die eine luftbewegungsunabhängige Pufferzone (PB, PB1, PB2, PB3, PB4) mit dem Filterstreifen und/oder mit einer an den Filterstreifen angrenzenden Schutzzone (PA, PA1, PA2, PA3) überlappt, und, im Fall einer Überlappung, die Applikationsparameter verändert werden.

10. Verfahren nach einem der Ansprüche 1 bis 9, wobei die Applikationsparameter ausgewählt sind aus der Reihe: Art und Form der mindestens einen Sprühdüse (S, S1, S2, S3, S4), Anzahl der verwendeten Sprühdüsen (S, S1, S2, S3, S4), Anordnung der Sprühdüsen (S, S1, S2, S3, S4), Sprühdruck, Austrittsgeschwindigkeit des Sprühmittels (SM) aus der mindestens einen Sprühdüse (S, S1, S2, S3, S4), Art des Sprühmittels (SM) und/oder Bewegungsgeschwindigkeit der Sprühvorrichtung (1).

11. Verfahren nach einem der Ansprüche 1 bis 9, wobei der Schritt Anpassen von Applikationsparametern zur Verhinderung der Überlappung eine oder mehrere der folgenden Maßnahmen bedeutet:

- Stoppen oder Unterbrechung des Applizierens
- Stoppen des Austritts von Sprühmittels (SM) aus einer oder mehreren Sprühdüsen (S, S1, S2, S3, S4)
- Verändern der Öffnung der mindestens einen Sprühdüse (S, S1, S2, S3, S4)
- Verändern des Sprühdrucks der mindestens einen Sprühdüse (S, S1, S2, S3, S4)
- Verwenden einer anderen Sprühdüse oder einer Mehrzahl an anderen Sprühdüsen
- Ändern der Bewegungsgeschwindigkeit der Sprühvorrichtung (1)
- Ändern der Bewegungsrichtung (P) der Sprühvorrichtung (1)
- Ändern des Sprühmittels (SM).

12. Sprühvorrichtung (1) umfassend:

- Mittel zum Bewegen der Sprühvorrichtung (1) in oder über einem Zielgebiet (TA), wobei das Zielgebiet (TA) mindestens eine Schutzzone (PA, PA1, PA2, PA3) umfasst, und/oder an mindestens eine Schutzzone (PA, PA1, PA2, PA3) angrenzt und/oder in einer Nachbarschaft zu mindestens einer Schutzzone (PA, PA1, PA2, PA3) liegt,
- mindestens eine Sprühdüse (S, S1, S2, S3, S4),
- Mittel zum Ausbringen von Sprühmittel (SM) über die mindestens eine Sprühdüse (S, S1, S2, S3, S4),
- Mittel zum Bestimmen der Position der mindestens einen Sprühdüse (S, S1, S2, S3, S4) in dem Zielgebiet (TA),
- einen Sensor (14) zum Ermitteln einer Richtung (W) einer Luftbewegung,
- eine Steuer- und Recheneinheit (22),

wobei die Steuer- und Recheneinheit (22) konfiguriert ist, während der Applikation von Sprühmittel (SM) gemäß definierter Applikationsparameter fortlaufend die Position der mindestens einen Sprühdüse (S, S1, S2, S3, S4) in dem Zielgebiet (TA) zu be-stimmen, fortlaufend Messdaten zur Rich-tung (W) der Luftbewegung zu empfangen, **dadurch gekennzeichnet, dass**

- jede vorhandene Schutzzone (PA, PA1, PA2, PA3) durch einen Mindestabstand (D, $D_1$, $D_2$, $D_3$) gekennzeichnet ist, der bei der Applikation des Sprühmittels mindestens einzuhalten ist, die Steuer- und Recheneinheit (22) ferner konfiguriert ist, anhand der Position und der empfangenen Messdaten für jede vorhandene Schutzzone (PA, PA1, PA2, PA3) eine korrespondierende Pufferzone (PB, PB1, PB2, PB3, PB4) zu ermitteln, wobei sich die korrespondierende Pufferzone (PB, PB1, PB2, PB3, PB4) von der mindestens einen Sprühdüse (S, S1, S2, S3, S4) in die Richtung (W) der Luftbewegung erstreckt, wobei die korrespondierende Pufferzone (PB, PB1, PB2, PB3, PB4) eine Ausdehnung in Richtung (W) der Luftbewegung aufweist, die mit dem Mindestabstand (D, $D_1$, $D_2$, $D_3$) korreliert, und die Steuer- und Recheneinheit (22) ferner konfiguriert ist, zu prüfen, ob eine Überlappung zwischen der mindestens einen Schutzzone (PA, PA1, PA2, PA3) und der mit ihr korrespondierenden Pufferzone (PB, PB1, PB2, PB3, PB4) vorliegt, und für den Fall, dass mindestens eine Überlappung vorliegt, die Applikationsparameter so zu verändern, dass keine Überlappung mehr vorliegt.

13. Computersystem (20) umfassend

• eine Empfangseinheit (21)

• eine Steuer- und Recheneinheit (22) und

• eine Ausgabeeinheit (23)

- wobei die Steuer- und Recheneinheit (22) konfiguriert ist, die Empfangseinheit (21) zu veranlassen, fortlaufend eine Position mindestens einer Sprühdüse (S, S1, S2, S3, S4) an einer Sprühvorrichtung (1) in einem Zielgebiet (TA) zu ermitteln, wobei das Zielgebiet (TA) mindestens eine Schutzzone (PA, PA1, PA2, PA3) umfasst, und/oder an mindestens eine Schutzzone (PA, PA1, PA2, PA3) angrenzt und/oder in einer Nachbarschaft zu mindestens einer Schutzzone (PA, PA1, PA2, PA3) liegt, wobei sich die Sprühvorrichtung (1) in oder über dem Zielgebiet (TA) bewegt und Sprühmittel (SM) gemäß definierter Applikationsparameter über die mindestens eine Sprühdüse (S, S1, S2, S3, S4) appliziert,

- wobei die Steuer- und Recheneinheit (22) konfiguriert ist, die Empfangseinheit (21) zu veranlassen, fortlaufend eine Richtung (W) einer Luftbewegung zu empfangen,

**dadurch gekennzeichnet, dass**

- jede vorhandene Schutzzone (PA, PA1, PA2, PA3) durch einen Mindestabstand ($D$, $D_1$, $D_2$, $D_3$) gekennzeichnet ist, der bei der Applikation des Sprühmittels mindestens einzuhalten ist,

- die Steuer- und Recheneinheit (22) konfiguriert ist, anhand der Position der mindestens einen Sprühdüse (S, S1, S2, S3, S4) und der Richtung (W) der Luftbewegung für jede vorhandene Schutzzone (PA, PA1, PA2, PA3) eine korrespondierende Pufferzone (PB, PB1, PB2, PB3, PB4) zu ermitteln, wobei sich die korrespondierende Pufferzone (PB, PB1, PB2, PB3, PB4) von der mindestens einen Sprühdüse (S, S1, S2, S3, S4) in die Richtung (W) der Luftbewegung erstreckt, wobei die korrespondierende Pufferzone (PB, PB1, PB2, PB3, PB4) eine Ausdehnung in Richtung (W) der Luftbewegung aufweist, die mit dem Mindestabstand ($D$, $D_1$, $D_2$, $D_3$) korreliert, und

- die Steuer- und Recheneinheit (22) konfiguriert ist, zu prüfen, ob eine Überlappung zwischen der mindestens einen Schutzzone (PA, PA1, PA2, PA3) und der mit ihr korrespondierenden Pufferzone (PB, PB1, PB2, PB3, PB4) vorliegt, und für den Fall, dass mindestens eine Überlappung vorliegt, die Applikationsparameter so zu verändern, dass keine Überlappung mehr vorliegt, oder die Ausgabeeinheit (23) zu veranlassen, ein oder mehrere Signale auszugeben, die zu einer Änderung der Applikationsparameter führen, so dass keine Überlappung mehr vorliegt.

14. Computerprogrammprodukt umfassend ein Computerprogramm, das in einen Arbeitsspeicher eines Computersystems (20) gemäß Anspruch 13 geladen werden kann und dort das Computersystem (20) dazu veranlasst. folgende Schritte ausführen:

- Ermitteln einer Position mindestens einer Sprühdüse (S, S1, S2, S3, S4) an einer Sprühvorrichtung (1) in einem Zielgebiet (TA), wobei das Zielgebiet (TA) mindestens eine Schutzzone (PA, PA1, PA2, PA3) umfasst, und/oder an mindestens eine Schutzzone (PA, PA1, PA2, PA3) angrenzt und/oder in einer Nachbarschaft zu mindestens einer Schutzzone (PA, PA1, PA2, PA3) liegt, wobei sich die Sprühvorrichtung (1) in oder über dem Zielgebiet (TA) bewegt und Sprühmittel (SM) gemäß definierter Applikationsparameter über die mindestens eine Sprühdüse (S, S1, S2, S3, S4) appliziert, wobei jede vorhandene Schutzzone (PA, PA1, PA2, PA3) durch einen Mindestabstand ($D$, $D_1$, $D_2$, $D_3$) gekennzeichnet ist, der bei der Applikation des Sprühmittels mindestens einzuhalten ist,

- Empfangen einer Richtung (W) einer Luftbewegung,

- für jede vorhandene Schutzzone (PA, PA1, PA2, PA3): Ermitteln einer korrespondierenden Pufferzone (PB, PB1, PB2, PB3, PB4) anhand der Position der mindestens einen Sprühdüse (S, S1, S2, S3, S4) und der Richtung (W) der Luftbewegung, wobei sich die korrespondierende Pufferzone (PB, PB1, PB2, PB3, PB4) von der mindestens einen Sprühdüse (S, S1, S2, S3, S4) in die Richtung (W) der Luftbewegung erstreckt, wobei die korrespondierende Pufferzone (PB, PB1, PB2, PB3, PB4) eine Ausdehnung in Richtung (W) der Luftbewegung aufweist, die mit dem Mindestabstand ($D$, $D_1$, $D_2$, $D_3$) korreliert,

- Prüfen, ob eine Überlappung zwischen der mindestens einen Schutzzone (PA, PA1, PA2, PA3) und der mit ihr korrespondierenden Pufferzone (PB, PB1, PB2, PB3, PB4) vorliegt,

- für den Fall, dass mindestens eine Überlappung vorliegt: Ausgeben eines oder mehrerer Signale, die zu einer Veränderung der Applikationsparameter führen, so dass keine Überlappung mehr vorliegt.

**Claims**

1. Method comprising the steps of:

- applying a spray product (SM) in accordance with defined application parameters in a target area (TA) by means of a spray apparatus (1), wherein the spray apparatus (1) comprises at least one spray nozzle (S, S1, S2, S3, S4), wherein the target area (TA) comprises at least one non-target zone (PA, PA1, PA2, PA3), and/or borders at least one non-target zone (PA, PA1, PA2, PA3) and/or is located in a vicinity of at least one non-target zone (PA, PA1, PA2, PA3), wherein each non-target zone (PA, PA1, PA2, PA3) present is **characterized by** a minimum distance ($D$, $D_1$, $D_2$, $D_3$) which at least must be observed when applying the spray product,
- during the application:

 o determining a direction (W) of an air movement,
 o determining a position of the at least one spray nozzle (S, S1, S2, S3, S4),
 o for each non-target zone (PA, PA1, PA2, PA3) present: ascertaining a buffer zone (PB, PB1, PB2, PB3, PB4) corresponding to the non-target zone (PA, PA1, PA2, PA3), wherein the corresponding buffer zone (PB, PB1, PB2, PB3, PB4) extends from the at least one spray nozzle (S, S1, S2, S3, S4) in the direction (W) of the air movement, wherein the corresponding buffer zone (PB, PB1, PB2, PB3, PB4) has an extent in the direction (W) of the air movement that correlates with the minimum distance ($D$, $D_1$, $D_2$, $D_3$),
 o checking whether there is an overlap between the at least one non-target zone (PA, PA1, PA2, PA3) and its corresponding buffer zone (PB, PB1, PB2, PB3, PB4),
 o in the event of an overlap: adapting application parameters to prevent the overlap,

- continuing the application using the adapted application parameters.

2. Method according to Claim 1, wherein the spray apparatus (1) comprises a plurality of spray nozzles (S, S1, S2, S3, S4), wherein separate buffer zones (PB, PB1, PB2, PB3, PB4) are ascertained for groups of spray nozzles (S, S1, S2, S3, S4) and/or for individual nozzles.

3. Method according to either of Claims 1 and 2, wherein, in addition to the direction (W) of the air movement, an air movement velocity is determined and the extent of the buffer zone (PB, PB1, PB2, PB3, PB4) in the direction of the air movement (W) correlates with the air movement velocity.

4. Method according to any of Claims 1 to 3, wherein the buffer zone (PB, PB1, PB2, PB3, PB4) has the form of a polygon.

5. Method according to any of Claims 1 to 4, wherein the step of ascertaining a buffer zone (PB, PB1, PB2, PB3, PB4) corresponding to the non-target zone (PA, PA1, PA2, PA3) comprises the following substeps:

 - ascertaining a wetting area (WA, WA1, WA2, WA3, WA4)
 - displacing the wetting area (WA, WA1, WA2, WA3, WA4) in the direction (W) of the air movement by a defined amount
 - ascertaining an area which is swept during the displacement
 - setting the area as the buffer zone (PB, PB1, PB2, PB3, PB4).

6. Method according to Claim 5, wherein the wetting area (WA, WA1, WA2, WA3, WA4) has a circular, elliptical, polygonal or linear form.

7. Method according to Claim 5, wherein the wetting area (WA, WA1, WA2, WA3, WA4) corresponds to a standstill wetting area.

8. Method according to any of Claims 1 to 7, wherein the air movement is wind.

9. Method according to any of Claims 1 to 8, wherein at least one air movement-independent buffer zone (PB, PB1, PB2, PB3, PB4) is ascertained, the extent of which, starting from the position of the at least one spray nozzle (S, S1, S2, S3, S4), corresponds at least to the width ($B$) of a filter strip, wherein, during the application, a check is made as to whether the one air movement-independent buffer zone (PB, PB1, PB2, PB3, PB4) overlaps with the filter strip and/or with a non-target zone (PA, PA1, PA2, PA3) bordering the filter strip and, in the event of an overlap, the application parameters are altered.

10. Method according to any of Claims 1 to 9, wherein the application parameters are selected from the group: type and form of the at least one spray nozzle (S, S1, S2, S3, S4), number of spray nozzles (S, S1, S2, S3, S4) used, arrangement of the spray nozzles (S, S1, S2, S3, S4), spray pressure, exit velocity of the spray product (SM) from the at least one spray nozzle (S, S1, S2, S3, S4), type of spray product (SM) and/or movement velocity of the spray apparatus (1).

11. Method according to any of Claims 1 to 9, wherein the step of adapting application parameters to prevent the overlap implies one or more of the following measures:

 - stopping or interrupting the application
 - stopping the exit of spray product (SM) from one or more spray nozzles (S, S1, S2, S3, S4)
- altering the opening of the at least one spray nozzle (S, S1, S2, S3, S4)
- altering the spray pressure of the at least one spray nozzle (S, S1, S2, S3, S4)
- using a different spray nozzle or a plurality of different spray nozzles
- changing the movement velocity of the spray apparatus (1)
- changing the movement direction (P) of the spray apparatus (1)
- changing the spray product (SM).

12. Spray apparatus (1) comprising:

- means for moving the spray apparatus (1) in or over a target area (TA), wherein the target area (TA) comprises at least one non-target zone (PA, PA1, PA2, PA3), and/or borders at least one non-target zone (PA, PA1, PA2, PA3) and/or is located in a vicinity of at least one non-target zone (PA, PA1, PA2, PA3),
- at least one spray nozzle (S, S1, S2, S3, S4),
- means for delivering spray product (SM) via the at least one spray nozzle (S, S1, S2, S3, S4),
- means for determining the position of the at least one spray nozzle (S, S1, S2, S3, S4) in the target area, (TA),
- a sensor (14) for ascertaining a direction (W) of an air movement,
- a control and processing unit (22),

wherein the control and processing unit (22) is configured to continually determine the position of the at least one spray nozzle (S, S1, S2, S3, S4) in the target area (TA) during the application of spray product (SM) in accordance with defined application parameters, to continually receive measurement data relating to the direction (W) of the air movement, **characterized in that**

- each non-target zone (PA, PA1, PA2, PA3) present is **characterized by** a minimum distance ($D$, $D_1$, $D_2$, $D_3$) which at least must be observed when applying the spray product,

the control and processing unit (22) is further configured to ascertain, on the basis of the position and the received measurement data for each non-target zone (PA, PA1, PA2, PA3) present, a corresponding buffer zone (PB, PB1, PB2, PB3, PB4), wherein the corresponding buffer zone (PB, PB1, PB2, PB3, PB4) extends from the at least one spray nozzle (S, S1, S2, S3, S4) in the direction (W) of the air movement, wherein the corresponding buffer zone (PB, PB1, PB2, PB3, PB4) has an extent in the direction (W) of the air movement that correlates with the minimum distance ($D$, $D_1$, $D_2$, $D_3$), and the control and processing unit (22) is further configured to check whether there is an overlap between the at least one non-target zone (PA, PA1, PA2, PA3) and its corresponding buffer zone (PB, PB1, PB2, PB3, PB4), and, in the event that there is at least one overlap, to alter the application parameters in such a way that there is no longer any overlap.

13. Computer system (20) comprising

• a receiving unit (21)
• a control and processing unit (22) and
• an output unit (23)
- wherein the control and processing unit (22) is configured to cause the receiving unit (21) to continually ascertain a position of at least one spray nozzle (S, S1, S2, S3, S4) on a spray apparatus (1) in a target area (TA), wherein the target area (TA) comprises at least one non-target zone (PA, PA1, PA2, PA3), and/or borders at least one non-target zone (PA, PA1, PA2, PA3) and/or is located in a vicinity of at least one non-target zone (PA, PA1, PA2, PA3), wherein the spray apparatus (1) moves in or over the target area (TA) and applies spray product (SM) in accordance with defined application parameters via the at least one spray nozzle (S, S1, S2, S3, S4),
- wherein the control and processing unit (22) is configured to cause the receiving unit (21) to continually receive a direction (W) of an air movement, **characterized in that**
- each non-target zone (PA, PA1, PA2, PA3) present is **characterized by** a minimum distance ($D$, $D_1$, $D_2$, $D_3$) which at least must be observed when applying the spray product,
- the control and processing unit (22) is configured to ascertain, on the basis of the position of the at least one spray nozzle (S, S1, S2, S3, S4) and the direction (W) of the air movement for each non-target zone (PA, PA1, PA2, PA3) present, a corresponding buffer zone (PB, PB1, PB2, PB3, PB4), wherein the corresponding buffer zone (PB, PB1, PB2, PB3, PB4) extends from the at least one spray nozzle (S, S1, S2, S3, S4) in the direction (W) of the air movement, wherein the corresponding buffer zone (PB, PB1, PB2, PB3, PB4) has an extent in the direction (W) of the air movement that correlates with the minimum distance ($D$, $D_1$, $D_2$, $D_3$), and
- the control and processing unit (22) is configured to check whether there is an overlap between the at least one non-target zone (PA, PA1, PA2, PA3) and its corresponding buffer zone (PB, PB1, PB2, PB3, PB4), and, in the event that there is at least one overlap, to alter the application parameters in such a way that there is no longer any overlap, or to cause the output unit (23) to output one or more signals which lead to a change in the application parameters, so that there is no longer any overlap.

14. Computer program product comprising a computer program which can be loaded into a main memory of a computer system (20) according to Claim 13 and there causes the computer system (20) to execute the following steps:

- ascertaining a position of at least one spray nozzle (S, S1, S2, S3, S4) on a spray apparatus (1) in a target area (TA), wherein the target area (TA) comprises at least one non-target zone (PA, PA1, PA2, PA3), and/or borders at least one non-target zone (PA, PA1, PA2, PA3) and/or is located in a vicinity of at least one non-target zone (PA, PA1, PA2, PA3), wherein the spray apparatus (1) moves in or over the target area (TA) and applies spray product (SM) in accordance with defined application parameters via the at least one spray nozzle (S, S1, S2, S3, S4), wherein each non-target zone (PA, PA1, PA2, PA3) present is **characterized by** a minimum distance ($D$, $D_1$, $D_2$, $D_3$) which at least must be observed when applying the spray product,
- receiving a direction (W) of an air movement,
- for each non-target zone (PA, PA1, PA2, PA3) present: ascertaining a corresponding buffer zone (PB, PB1, PB2, PB3, PB4) on the basis of the position of the at least one spray nozzle (S, S1, S2, S3, S4) and the direction (W) of the air movement, wherein the corresponding buffer zone (PB, PB1, PB2, PB3, PB4) extends from the at least one spray nozzle (S, S1, S2, S3, S4) in the direction (W) of the air movement, wherein the corresponding buffer zone (PB, PB1, PB2, PB3, PB4) has an extent in the direction (W) of the air movement that correlates with the minimum distance ($D$, $D_1$, $D_2$, $D_3$),
- checking whether there is an overlap between the at least one non-target zone (PA, PA1, PA2, PA3) and its corresponding buffer zone (PB, PB1, PB2, PB3, PB4),
- in the event that there is at least one overlap: outputting one or more signals which lead to an alteration of the application parameters, so that there is no longer any overlap.

**Revendications**

1. Procédé comprenant les étapes suivantes :

- appliquer un agent de pulvérisation (SM) selon des paramètres d'application définis dans une zone cible (TA) au moyen d'un dispositif de pulvérisation (1), le dispositif de pulvérisation (1) comprenant au moins une buse de pulvérisation (S, S1, S2, S3, S4), la zone cible (TA) comprenant au moins une zone de protection (PA, PA1, PA2, PA3) et/ou étant adjacente à au moins une zone de protection (PA, PA1, PA2, PA3) et/ou se trouvant à proximité d'au moins une zone de protection (PA, PA1, PA2, PA3), chaque zone de protection existante (PA, PA1, PA2, PA3) étant **caractérisée par** une distance minimale ($D$, $D_1$, $D_2$, $D_3$) qui doit au moins être respectée lors de l'application du produit pulvérisé,
- pendant l'application :

o déterminer une direction (W) d'un mouvement d'air,
o déterminer une position desdites une ou plusieurs buses de pulvérisation (S, S1, S2, S3, S4),
o pour chaque zone de protection existante (PA, PA1, PA2, PA3) : déterminer une zone tampon (PB, PB1, PB2, PB3, PB4) correspondant à la zone de protection (PA, PA1, PA2, PA3), la zone tampon correspondante (PB, PB1, PB2, PB3, PB4) s'étendant depuis ladite au moins une buse de pulvérisation (S, S1, S2, S3, S4) dans la direction (W) du mouvement de l'air, la zone tampon correspondante (PB, PB1, PB2, PB3, PB4) s'étendant dans la direction (W) du mouvement de l'air, en corrélation avec la distance minimale ($D$, $D_1$, $D_2$, $D_3$),
o vérifier s'il existe un chevauchement entre la zone de protection (PA, PA1, PA2, PA3) et la zone tampon (PB, PB1, PB2, PB3, PB4) qui lui correspond,
o en cas de chevauchement : adapter les paramètres d'application pour empêcher le chevauchement,

- poursuivre l'application en utilisant les paramètres d'application adaptés.

2. Procédé selon la revendication 1, dans lequel le dispositif de pulvérisation (1) comprend une pluralité de buses de pulvérisation (S, S1, S2, S3, S4), des zones tampons séparées (PB, PB1, PB2, PB3, PB4) étant déterminées pour des groupes de buses de pulvérisation (S, S1, S2, S3, S4) et/ou pour des buses individuelles.

3. Procédé selon l'une des revendications 1 à 2, dans lequel, en plus de la direction (W) du mouvement de l'air, il est déterminé une vitesse de mouvement de l'air, et l'extension de la zone tampon (PB, PB1, PB2, PB3, PB4) dans la direction du mouvement de l'air (W) est mise en corrélation avec la vitesse de mouvement de l'air.

4. Procédé selon l'une des revendications 1 à 3, dans lequel la zone tampon (PB, PB1, PB2, PB3, PB4) présente la forme d'un polygone.

5. Procédé selon l'une des revendications 1 à 4, dans lequel l'étape de détermination d'une zone tampon (PB, PB1, PB2, PB3, PB4) correspondant à la zone de protection (PA, PA1, PA2, PA3) comprend les sous-étapes suivantes :

  - déterminer une surface de mouillage (WA, WA1, WA2, WA3, WA4),
  - déplacer la surface de mouillage (WA, WA1, WA2, WA3, WA4) dans la direction (W) du mouvement de l'air d'une valeur définie,
  - déterminer une surface qui est balayée lors du déplacement,
  - définir la surface en tant que zone tampon (PB, PB1, PB2, PB3, PB4).

6. Procédé selon la revendication 5, dans lequel la surface de mouillage (WA, WA1, WA2, WA3, WA4) présente une forme circulaire, elliptique, polygonale ou linéaire.

7. Procédé selon la revendication 5, dans lequel la surface de mouillage (WA, WA1, WA2, WA3, WA4) correspond à une surface de mouillage à l'arrêt.

8. Procédé selon l'une des revendications 1 à 7, dans lequel le mouvement de l'air est dû au vent.

9. Procédé selon l'une des revendications 1 à 8, dans lequel il est déterminé au moins une zone tampon (PB, PB1, PB2, PB3, PB4) indépendante du mouvement de l'air, dont l'étendue, à partir de la position de ladite au moins une buse de pulvérisation (S, S1, S2, S3, S4), correspond au moins à la largeur (B) d'une bande filtrante ; pendant l'application, il est vérifié si une zone tampon indépendante du mouvement de l'air (PB, PB1, PB2, PB3, PB4) chevauche la bande filtrante et/ou une zone de protection (PA, PA1, PA2, PA3) adjacente à la bande filtrante, et, en cas de chevauchement, les paramètres d'application sont modifiés.

10. Procédé selon l'une des revendications 1 à 9, dans lequel les paramètres d'application sont choisis parmi la série : type et forme desdites une ou plusieurs buses de pulvérisation (S, S1, S2, S3, S4), nombre de buses de pulvérisation utilisées (S, S1, S2, S3, S4), disposition des buses de pulvérisation (S, S1, S2, S3, S4), pression de pulvérisation, vitesse de sortie du produit pulvérisé (SM) hors desdites une ou plusieurs buses de pulvérisation (S, S1, S2, S3, S4), type de produit pulvérisé (SM) et/ou vitesse de déplacement du dispositif de pulvérisation (1).

11. Procédé selon l'une des revendications 1 à 9, dans lequel l'étape d'ajustement des paramètres d'application pour empêcher le chevauchement implique une ou plusieurs des mesures suivantes :

  - arrêt ou interruption de l'application,
  - arrêt de la sortie de l'agent de pulvérisation (SM) d'une ou plusieurs buses de pulvérisation (S, S1, S2, S3, S4),
  - modification de l'ouverture d'au moins une buse de pulvérisation (S, S1, S2, S3, S4),
  - modification de la pression de pulvérisation d'au moins une buse de pulvérisation (S, S1, S2, S3, S4),
  - utilisation d'une autre buse de pulvérisation ou plusieurs autres buses de pulvérisation,
  - modification de la vitesse de déplacement du dispositif de pulvérisation (1),
  - modification de la direction de déplacement (P) du dispositif de pulvérisation (1),
  - modification du produit pulvérisé (SM).

12. Dispositif de pulvérisation (1) comprenant :

  - des moyens pour déplacer le dispositif de pulvérisation (1) dans ou au-dessus d'une zone cible (TA), la zone cible (TA) comprenant au moins une zone de protection (PA, PA1, PA2, PA3), et/ou étant adjacente à au moins une zone de protection (PA, PA1, PA2, PA3) et/ou étant située à proximité d'au moins une zone de protection (PA, PA1, PA2, PA3),
  - au moins une buse de pulvérisation (S, S1, S2, S3, S4),
  - des moyens pour répandre le produit à pulvériser (SM) par l'intermédiaire desdites une ou plusieurs buses de pulvérisation (S, S1, S2, S3, S4),
  - des moyens pour déterminer la position de la buse de pulvérisation (S, S1, S2, S3, S4) dans la zone cible (TA),
  - un capteur (14) pour déterminer la direction (W) d'un mouvement d'air,
  - une unité (22) de commande et de calcul, et l'unité (22) de commande et de calcul étant configurée pour déterminer en continu, pendant l'application de l'agent de pulvérisation (SM) selon des paramètres d'application définis, la position desdites une ou plusieurs buses de pulvérisation (S, S1, S2, S3, S4) dans la zone cible (TA), pour recevoir en continu des données de mesure sur la direction (W) du mouvement de l'air, **caractérisé en ce que**

- chaque zone de protection existante (PA, PA1, PA2, PA3) est **caractérisée par** une distance minimale ($D$, $D_1$, $D_2$, $D_3$) qui doit au moins être respectée lors de l'application de l'agent de pulvérisation, l'unité (22) de commande et de calcul est en outre configurée pour déterminer une zone tampon correspondante (PB, PB1, PB2, PB3, PB4) pour chaque zone de protection existante (PA, PA1, PA2, PA3) à l'aide de la position et des données de mesure reçues, la zone tampon correspondante (PB, PB1, PB2, PB3, PB4) s'étend depuis au moins une buse de pulvérisation (S, S1, S2, S3, S4) dans la direction (W) du mouvement de l'air, la zone tampon correspondante (PB, PB1, PB2, PB3, PB4) présentant une extension dans la direction (W) du mouvement de l'air qui est corrélée à la distance minimale ($D$, $D_1$, $D_2$, $D_3$), et l'unité (22) de commande et de calcul est en outre configurée pour vérifier s'il existe un chevauchement entre la zone de protection (PA, PA1, PA2, PA3) et la zone tampon (PB, PB1, PB2, PB3, PB4) qui lui correspond et, dans le cas où il y a au moins un chevauchement, pour modifier les paramètres d'application de manière à ce qu'il n'y ait plus de chevauchement.

13. Système informatique (20) comprenant

 • une unité de réception (21),
 • une unité (22) de commande et de calcul, et
 • une unité de sortie (23),
 - l'unité (22) de commande et de calcul étant configurée pour amener l'unité de réception (21) à déterminer en continu la position d'au moins une buse de pulvérisation (S, S1, S2, S3, S4) sur un dispositif de pulvérisation (1) dans une zone cible (TA), la zone cible (TA) comprenant au moins une zone de protection (PA, PA1, PA2, PA3) et/ou étant adjacente à au moins une zone de protection (PA, PA1, PA2, PA3) et/ou se trouvant à proximité d'au moins une zone de protection (PA, PA1, PA2, PA3), le dispositif de pulvérisation (1) se déplaçant dans ou au-dessus de la zone cible (TA) et appliquant le produit à pulvériser (SM) via au moins une buse de pulvérisation (S, S1, S2, S3, S4) selon des paramètres d'application définis,
 - l'unité (22) de commande et de calcul étant configurée pour amener l'unité de réception (21) à recevoir en continu une direction (W) d'un mouvement d'air,
 **caractérisé en ce que**
 - chaque zone de protection existante (PA, PA1, PA2, PA3) est **caractérisée par** une distance minimale ($D$, $D_1$, $D_2$, $D_3$) qui doit au moins être respectée lors de l'application de l'agent de pulvérisation,
 - l'unité (22) de commande et de calcul est configurée pour déterminer, à partir de la position de ladite au moins une buse de pulvérisation (S, S1, S2, S3, S4) et de la direction (W) du mouvement de l'air, une zone tampon correspondante (PB, PB1, PB2, PB3, PB4) pour chaque zone de protection existante (PA, PA1, PA2, PA3), la zone tampon correspondante (PB, PB1, PB2, PB3, PB4) s'étendant depuis au moins une buse de pulvérisation (S, S1, S2, S3, S4) dans la direction (W) du mouvement de l'air, la zone tampon correspondante (PB, PB1, PB2, PB3, PB4) présentant une extension dans la direction (W) du mouvement de l'air qui est corrélée à la distance minimale ($D$, $D_1$, $D_2$, $D_3$), et
 - l'unité (22) de commande et de calcul est configurée pour vérifier s'il existe un chevauchement entre la zone de protection (PA, PA1, PA2, PA3) et la zone tampon (PB, PB1, PB2, PB3, PB4) qui lui correspond, et, dans le cas où il y a au moins un chevauchement, modifier les paramètres d'application de telle sorte qu'il n'y ait plus de chevauchement, ou faire en sorte que l'unité de sortie (23) émette un ou plusieurs signaux qui conduisent à une modification des paramètres d'application de telle sorte qu'il n'y ait plus de chevauchement.

14. Produit programme d'ordinateur comprenant un programme d'ordinateur qui est apte à être chargé dans la mémoire vive d'un système (20) d'ordinateur selon la revendication 13 et qui, dans celle-ci, amène le système (20) d'ordinateur à mettre en œuvre les étapes suivantes :

 - déterminer la position d'au moins une buse de pulvérisation (S, S1, S2, S3, S4) sur un dispositif de pulvérisation (1) dans une zone cible (TA), la zone cible (TA) comprenant au moins une zone de protection (PA, PA1, PA2, PA3), et/ou étant adjacente à au moins une zone de protection (PA, PA1, PA2, PA3) et/ou est située à proximité d'au moins une zone de protection (PA, PA1, PA2, PA3), le dispositif de pulvérisation (1) se déplaçant dans ou au-dessus de la zone cible (TA) et appliquant des produits de pulvérisation (SM) selon des paramètres d'application définis par l'intermédiaire d'au moins une buse de pulvérisation (S, S1, S2, S3, S4), chaque zone de protection existante (PA, PA1, PA2, PA3) étant **caractérisée par** une distance minimale ($D$, $D_1$, $D_2$, $D_3$) qui doit être respectée au minimum lors de l'application de l'agent de pulvérisation,
 - recevoir une direction (W) d'un mouvement d'air,
 - pour chaque zone de protection existante (PA, PA1, PA2, PA3) : déterminer une zone tampon correspondante (PB, PB1, PB2, PB3, PB4) à l'aide de la position desdites une ou plusieurs buses de pulvérisation (S, S1, S2, S3, S4) et de la direction (W) du mouvement de l'air, la zone tampon correspondante (PB, PB1, PB2, PB3, PB4) s'étendant depuis au moins une buse de pulvérisation (S, S1, S2, S3, S4) dans la direction (W) du mouvement de l'air, la zone tampon correspondante (PB, PB1, PB2, PB3, PB4) présentant une extension dans la direction (W) du mouvement de l'air qui est corrélée à la distance minimale ($D, D_1, D_2, D_3$),

- vérifier s'il existe un chevauchement entre la zone de protection (PA, PA1, PA2, PA3) et la zone tampon (PB, PB1, PB2, PB3, PB4) qui lui correspond,

- dans le cas où il existe au moins un chevauchement : émission d'un ou plusieurs signaux qui entraînent une modification des paramètres d'application, de telle sorte qu'il n'y ait plus de chevauchement.

Fig. 1

Fig. 2

Fig. 3

Fig. 4

Fig. 5

Fig. 6

Fig. 7

Fig. 8

W

× S1 WA1   × S2 WA2   × S3 WA3   × S4 WA4

D

WA1'   WA2'   WA3'   WA4'

× S1   × S2   × S3   × S4

PB1   PB2   PB3   PB4

Fig. 9

W

× S1   × S2
WA12

× S3   × S4
WA34

D

D

WA12'

WA34'

× S1   × S2

× S3   × S4

PB12

PB34

Fig. 10

Fig. 11

Fig. 12

Fig. 13

EP 4 192 238 B1

Fig. 14

30

Fig. 15

**(a)**

PB1 ( ×S1
PB2 ( ×S2
PB3 ( ×S3
PB4 ( ×S4

**(b)**

PB

S1×
S2×
S3×
S4×

**(c)**

PB

S1×
S2×
S3×
S4×

**(d)**

PB

S1×
S2×
S3×
S4×

Fig. 16

Fig. 17

Fig. 18

(20)

(13)

(21)    (23)

(30)

SK

(14)

(22)

(40)

Fig. 19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9712688 A1